# EUROPÄISCHE PATENTSCHRIFT

(11) **EP 4 230 565 B1**
(45) Veröffentlichungstag und Bekanntmachung des Hinweises auf die Patenterteilung: **30.07.2025**
(21) Anmeldenummer: 23156703.3
(22) Anmeldetag: 15.02.2023
(51) Int. Cl.: B66C 1/10, B66C 1/62, B66C 23/18, F03D 13/10, B66C 13/08, H02K 15/00

(54) **AUSLÖSEVORRICHTUNG FÜR EINE HEBEKIPPVORRICHTUNG ZUM LÖSEN DER HEBEKIPPVORRICHTUNG VON EINEM GENERATORSEGMENT, HEBEKIPPVORRICHTUNG ZUM HEBEN UND KIPPEN EINES GENERATORSEGMENTS, VERFAHREN ZUM HEBEN UND KIPPEN EINES GENERATORSEGMENTS, UND VERFAHREN ZUR MONTAGE EINER HEBEKIPPVORRICHTUNG AN EINEM DEMONTIERTEN GENERATORSEGMENT**
RELEASE DEVICE FOR A LIFT-TILT APPARATUS FOR RELEASING THE LIFT-TILT APPARATUS FROM A GENERATOR SEGMENT, LIFT-TILT APPARATUS FOR LIFTING AND TILTING A GENERATOR SEGMENT, METHOD OF LIFTING AND TILTING A GENERATOR SEGMENT, AND METHOD FOR MOUNTING A LIFT-TILT APPARATUS ON A DISASSEMBLED GENERATOR SEGMENT
DISPOSITIF DE LIBÉRATION POUR UN APPAREIL DE LEVAGE-INCLINAISON POUR LIBÉRER L'APPAREIL DE LEVAGE-INCLINAISON D'UN SEGMENT DE GÉNÉRATEUR, APPAREIL DE LEVAGE-INCLINAISON POUR LEVAGE ET INCLINAISON D'UN SEGMENT DE GÉNÉRATEUR, PROCÉDÉ DE LEVAGE ET D'INCLINAISON D'UN SEGMENT DE GÉNÉRATEUR ET PROCÉDÉ DE MONTAGE D'UN APPAREIL DE LEVAGE-INCLINAISON SUR UN SEGMENT GÉNÉRATEUR DÉMONTÉ

(30) Priorität: 17.02.2022 DE 102022103727
(43) Veröffentlichungstag der Anmeldung: 23.08.2023
(73) Patentinhaber: Wobben Properties GmbH, 26607 Aurich (DE)
(72) Erfinder: Kevelam, Co, 26607 Aurich (DE)
(74) Vertreter: Eisenführ Speiser

(56) Entgegenhaltungen:
- CN-A- 105 936 470
- CN-B- 108 128 693
- CN-U- 214 456 261
- KR-A- 20150 025 360

## Beschreibung

Die Erfindung betrifft eine Auslösevorrichtung für eine Hebekippvorrichtung zum Lösen der Hebekippvorrichtung von einem Generatorsegment eines Generators. Ferner betrifft die Erfindung eine Hebekippvorrichtung zum Heben und Kippen eines Generatorsegments eines Generators. Weiterhin betrifft die Erfindung ein Verfahren zum Heben und Kippen eines Generatorsegments eines Generators. Ferner betrifft die Erfindung ein Verfahren zur Montage einer Hebekippvorrichtung an einem demontierten Generatorsegment.

Bei einer Windenergieanlage dient ein Generator der Wandlung von Windenergie in elektrische Energie. Hierzu wird der Generator an einem Maschinenhaus oder innerhalb des Maschinenhauses etwa in Nabenhöhe auf dem Turm der Windenergieanlage angeordnet. Zur Erzeugung der elektrischen Energie ist ein elektrodynamischer Rotor des Generators entweder direkt oder über ein Getriebe mit einem aerodynamischen Rotor der Windenergieanlage gekoppelt. Treibt der Wind den aerodynamischen Rotor an, bewirkt dies eine Drehbewegung des elektrodynamischen Rotors relativ zu einem elektrodynamischen Stator des Generators um eine Drehachse.

Zur Montage des Generators an dem Maschinenhaus muss der Generator mit einem Kran oder mehreren Kränen vom Boden oder von einem Transportfahrzeug aus einer Transportposition aufgenommen und bis etwa auf Nabenhöhe der Windenergieanlage angehoben werden, um dann in seiner Betriebsposition montiert werden zu können. Entsprechend ist der Generator nach einer Demontage von dem Maschinenhaus mit dem Kran bzw. den Kränen von der Nabenhöhe auf den Boden oder das Transportfahrzeug abzulassen. Dies gilt entsprechend auch für ein Generatorsegment eines Generators.

Üblicherweise erfolgt der Transport des Generators aus platzgründen liegend. Das heißt, während die Drehachse des Generators im montierten Zustand in der Betriebsposition im Wesentlichen horizontal ausgerichtet ist oder jedenfalls gegenüber einer horizontalen Ebene nur leicht geneigt ist, ist die Drehachse des Generators während des Transports in der Transportposition im Wesentlichen vertikal ausgerichtet. Insofern muss ein Generator für die Montage am Maschinenhaus mit dem Kran bzw. den Kränen vorab nicht nur angehoben werden, sondern auch von der Transportposition in die Betriebsposition um etwa 90° bis 100° gekippt oder gedreht werden. Entsprechend ist der Generator nach der Demontage aus der Betriebsposition abzulassen und um etwa 90° bis 100°in die Transportposition zu kippen. Dies gilt entsprechend auch für ein Generatorsegment eines Generators.

Es sind verschiedene Hebekippvorrichtungen bekannt, die nach Erkenntnis der Erfinder diverse Nachteile aufweisen. So kann beispielsweise das Befestigen der Hebekippvorrichtungen an dem Generator bzw. an dem Generatorsegment sowie auch das Lösen der Hebekippvorrichtungen von dem Generator bzw. von dem Generatorsegment aufwändig und insbesondere auch gefährlich sein. Ferner ist auch der Bauaufwand und die erforderliche Baumasse bei einigen der bekannten Hebekippvorrichtungen vergleichsweise hoch.

CN 214 456 261 U bezieht sich auf das technische Gebiet der Windkraftanlagen und offenbart eine Drehvorrichtung für die Bearbeitung von Windkraftanlagenrotoren, die eine Deckplatte und eine Auslösevorrichtung umfasst.

Der vorliegenden Erfindung liegt daher die Aufgabe zugrunde, eine Lösung bereitzustellen, welche die Nachteile bestehender Hebekippvorrichtungen überwindet. Der vorliegenden Erfindung liegt insbesondere die Aufgabe zugrunde, eine Auslösevorrichtung und/oder eine Hebekippvorrichtung und/oder ein Verfahren zum Heben und Kippen eines Generatorsegments bereitzustellen, welche/s das Heben und Kippen eines Generatorsegments im Vergleich zu bestehenden Hebekippvorrichtungen verbessert, insbesondere weniger aufwändig und weniger gefährlich macht.

Gemäß einem ersten Aspekt der Erfindung wird diese Aufgabe gelöst durch eine Auslösevorrichtung gemäß Anspruch 1. Diese Auslösevorrichtung für eine Hebekippvorrichtung ist zum Lösen der Hebekippvorrichtung von einem Generatorsegment eines Generators, insbesondere von einem Generatorsegment eines Generators einer Windenergieanlage, ausgebildet.

Ein solcher Generator, auch elektrischer Generator genannt, ist, wie bereits erläutert, zur Erzeugung von elektrischer Energie ausgebildet. Hierzu weist der Generator einen elektrodynamischen Rotor auf, welcher sich relativ zu einem elektrodynamischen Stator um eine Drehachse dreht. Bei solchen Generatoren wird zwischen Innenläufern und Außenläufern unterschieden. Bei einem als Innenläufer ausgebildeten Generator liegt der Rotor innerhalb des Stators. Bei einem als Außenläufer ausgebildeten Generator liegt der Rotor außerhalb des Stators.

Generatoren weisen eine Außenumfangsfläche auf, die eine Haupterstreckungsrichtung in Umfangsrichtung des Generators aufweist. Die Länge der Außenumfangsfläche entspricht dem Umfang des Generators an seiner Außenumfangsfläche, sie hängt also vom Durchmesser des Generators an der Außenumfangsfläche ab. Ferner erstreckt sich die Außenumfangsfläche orthogonal zu der Umfangsfläche in einer Axialrichtung mit einer Breite, die in aller Regel kleiner ist als die Länge der Außenumfangsfläche. Die Außenumfangsfläche ist im Wesentlichen koaxial zu der Drehachse des Generators ausgerichtet, wobei die Drehachse sich vorzugsweise im Wesentlichen in der Axialrichtung erstreckt.

In der Axialrichtung erstreckt sich der Generator zwischen zwei Stirnflächen, von denen die eine im Betrieb luvseitig, also den Rotorblättern zugewandt, und die andere leeseitig, also von den Rotorblättern abgewandt, ausgerichtet ist.

In Abhängigkeit der Abmessungen und des Gewichts des Generators ist der Generator aus einem einzigen Generatorsegment oder aber mehreren Generatorsegmenten ausgebildet oder zusammengesetzt. Die Transportmöglichkeit des Generators bzw. der Generatorsegmente, beispielsweise hinsichtlich der Abgrenzungen der zulässigen Abmessungen und/oder des zulässigen Transportgewichts des Generators bzw. Generatorsegments, sowie auch die zulässige Traglast der Kräne wirken sich dabei auf die Ausgestaltung, d.h. auf die zulässigen maximalen Abmessungen und das zulässig maximale Gewicht, des Generators bzw. der Generatorsegmente aus.

Bei einem Generator, der aus mehreren Generatorsegmenten zusammengesetzt ist, spricht man auch von einem segmentierten Generator. Ein solch segmentierter Generator weist häufig zwei als Generatorhälften ausgebildete Generatorsegmente auf. In dieser Ausführung erstrecken sich die Generatorhälften als Kreissektor, auch Kreisausschnitt genannt, in Umfangsrichtung mit einem Mittelpunktswinkel von 180° um die Drehachse. Generatoren können auch aus mehr als zwei Generatorsegmenten, beispielsweise aus drei oder vier Generatorsegmenten, zusammengesetzt sein. Bei Generatoren mit drei Generatorsegmenten erstrecken sich die Generatorsegmente in der Umfangsrichtung in der Regel als Kreissektor mit einem Mittelpunktswinkel von 120° um die Drehachse. Bei Generatoren mit vier Generatorsegmenten erstrecken sich die Generatorsegmente in der Umfangsrichtung in der Regel als Kreissektor mit einem Mittelpunktswinkel von 90° um die Drehachse. Entsprechend erstreckt sich ein Generatorsegment eines Generators, der durch ein einziges Generatorsegment ausgebildet wird, in der Umfangsrichtung mit einem Mittelpunktswinkel von 360° um die Drehachse.

Die Generatorsegmente, unabhängig davon, ob der Generator aus zwei, drei oder mehr Generatorsegmenten zusammengesetzt ist, weisen alle eine Trennschnittstelle auf, über die die Generatorsegmente für den Betrieb des Generators miteinander verbunden werden. In aller Regel sind die Trennschnittstellen hierzu flanschartig ausgebildet und/oder weisen Befestigungsanschlüsse auf, um die Generatorsegmente miteinander zu verbinden. Häufig werden die Generatorsegmente durch die Verwendung von Schrauben miteinander verbunden. Es kann ergänzend oder alternativ aber auch vorgesehen sein, die Generatorsegmente an den Trennschnittstellen miteinander zu verschweißen.

Für die Handhabung der Generatorsegmente, d.h. das Heben und Kippen des Generatorsegments, mit dem Kran bzw. den Kränen weisen diese an der Außenumfangsfläche und/oder an einer oder beiden Stirnflächen und/oder an der Trennschnittstelle Anschlusspunkte auf. Die Anschlusspunkte sind an den Tragstrukturen des Generatorsegments angebracht. Die Anschlusspunkte können beispielsweise als Flansch, Ösen, Bohrungen, Bolzen oder dergleichen ausgebildet sein. Es können je nach Position der Anschlusspunkte an dem Generatorsegment unterschiedliche Arten von Anschlusspunkten vorgesehen sein.

Die Position und die Art der Anschlusspunkte an einem Generatorsegment eines Generators kann auch von der Anzahl der Generatorsegmente abhängen. Beispielsweise kann bei einem Generator, der aus zwei Generatorsegmenten zusammengesetzt wird, zwischen einem unteren Generatorsegment, einer sogenannten 6-Uhr-Generatorhälfte, und einem oberen Generatorsegment, einer sogenannten 12-Uhr-Generatorhälfte, unterschieden werden. In der Montage ist dann vorgesehen, dass das obere Generatorsegment in der 12-Uhr-Position am Maschinenhaus montiert wird und das untere Generatorsegment in der 6-Uhr-Position am Maschinenhaus montiert wird. Entsprechend weisen das obere und untere Generatorsegment in Bezug auf die vertikale Heberichtung an der 12-Uhr-Position und an der 6-Uhr-Position des Generatorsegments unterschiedliche Anschlusspunkte auf. Wird der Generator als ganze angehoben bzw. abgesenkt, weist der Generator in Bezug auf die vertikale Heberichtung an der 12-Uhr-Position und an der 6-Uhr-Position des Generatorsegments unterschiedliche Anschlusspunkte auf.

Für das Heben und Kippen ist in aller Regel vorgesehen, dass ein Hauptkran mit den Anschlusspunkten an der 12-Uhr-Position verbunden wird und ein Hilfskran mit den Anschlusspunkten an der 6-Uhr-Position verbunden wird. Der Hauptkran trägt in der Regel die Hauptlast und dient insbesondere dem Heben des Generatorsegments. Der Hilfskran wirkt unterstützend und dient im Zusammenspiel mit dem Hauptkran insbesondere dem Kippen des Generatorsegments von der Transportposition in die Betriebsposition und umgekehrt von der Betriebsposition in die Transportposition. In aller Regel wird der Hilfskran nach dem Kippen im Wesentlichen nicht mehr benötigt.

Für ein einfaches und sicheres Heben und Kippen eines Generatorsegments ist die erfindungsgemäße Hebekippvorrichtung vorgesehen. Diese wird für das Heben und Kippen des Generatorsegments an den entsprechenden Anschlusspunkten des Generatorsegments angebracht. Hierzu weist die Hebekippvorrichtung eine Fixiervorrichtung auf, die mit den Anschlusspunkten zusammenwirkt. Insbesondere ist vorgesehen, dass die Hebekippvorrichtung mittels der Fixiervorrichtung mit dem zu hebenden und zu kippenden Generatorsegment kraftschlüssig und/oder formschlüssig verbunden wird. Die Fixiervorrichtung kann beispielsweise Flansche, Ösen, Bohrungen, Bolzen, Schrauben und/oder dergleichen aufweisen. Die Hebekippvorrichtung weist wiederum Anschlusspunkte auf, an denen der Kran bzw. die Kräne zum Heben und Kippen des Generatorsegments angeschlossen werden. Die Anschlusspunkte der Hebekippvorrichtung können beispielsweise als Flansche, Ösen, Bohrungen, Bolzen oder dergleichen ausgebildet sein. Es können je nach Position der Anschlusspunkte an der Hebekippvorrichtung unterschiedliche Anschlusspunkte vorgesehen sein.

Für den Betrieb der Hebekippvorrichtung weist die Hebekippvorrichtung eine Generatorhebevorrichtung und eine Generatorkippvorrichtung auf.

Die Generatorhebevorrichtung wird für das Heben und Kippen des Generatorsegments an einer Oberseite des Generatorsegments, der 12-Uhr-Position des Generatorsegments, angeordnet. Die Oberseite des Generatorsegments ist dabei jene Seite, die beim Anheben des Generatorsegments auf die Nabenhöhe nach oben in Richtung der Turmspitze weist. Beispielsweise kann das Generatorsegment an der Oberseite zur Anordnung der Generatorhebevorrichtung mehrere Bolzen aufweisen, in die die Hebekippvorrichtung greift.

Die Generatorkippvorrichtung wird hingegen an einer Unterseite des Generatorsegments, der 6-Uhr-Position des Generatorsegments, angeordnet. Die Unterseite des Generatorsegments ist dabei jene Seite, die beim Anheben des Generatorsegments auf die Nabenhöhe bzw. beim Absenken in Richtung des Bodens nach unten in Richtung des Bodens weist. An der Unterseite kann das Generatorsegment beispielsweise zur Anordnung der Generatorkippvorrichtung mehrere Zapfen aufweisen, in die die Generatorkippvorrichtung formschlüssig greift.

Vorzugsweise wird an die Generatorhebevorrichtung der Hauptkran angeschlagen, mit dem das Generatorsegment nach dem Kippen von der Transportposition in die Betriebsposition auf Nabenhöhe gehoben wird. An die Generatorkippvorrichtung wird hingegen vorzugsweise der Hilfskran angeschlagen, der insbesondere im Zusammenspiel mit dem Hauptkran dazu dient, das Generatorsegment aus der Transportposition in die Betriebsposition zu kippen bzw. von der Betriebsposition in die Transportposition zu kippen.

Nachdem das Generatorsegment von der Transportposition in die Betriebsposition gekippt wurde und bevor das Generatorsegment auf Nabenhöhe zur Montage an dem Maschinenhaus angehoben wird, muss die Generatorkippvorrichtung von dem Generatorsegment gelöst werden. Beziehungsweise, nachdem das Generatorsegment von der Nabenhöhe in Richtung des Bodens abgelassen wurde und bevor das Generatorsegment in die Transportposition gekippt werden kann, muss die Generatorkippvorrichtung an dem Generatorsegment befestigt werden. Dies erfolgt einfach uns sicher mit Hilfe der erfindungsgemäßen Auslösevorrichtung. Dies wird im Folgenden beispielhaft beschrieben:
Sowohl bei einer waagerechten Handhabung als auch beim Kippen des Generatorsegments, wird das Generatorsegment mit Hilfe des Hauptkrans und des Hilfskrans bewegt. Dabei wird das Generatorsegment für das Kippen des Generatorsegments mit beiden Kränen auf eine ausreichende Höhe oberhalb des Bodens gehoben, so dass das Generatorsegment beim Kippen nicht mit dem Boden kollidiert. Wenn das Generatorsegment in ausreichender Höhe hängt, wird das Generatorsegment mittels des Hilfskrans abgesenkt, so dass die volle Last des Generatorsegments von dem Hauptkran gehalten wird. Die Last, die auf den Hilfskran wirkt, nimmt während des Kippens des Generatorsegments kontinuierlich ab, bis die Generatorkippvorrichtung über die Fixiervorrichtung nur noch an dem Generatorsegment "hängt".

Nach dem Kippen wird die Generatorkippvorrichtung mechanisch durch die Auslösevorrichtung von Generatorsegment geschoben, die mechanisch durch die Bodenberührung betätigt wird. Sobald die Generatorkippvorrichtung samt der Auslösevorrichtung von dem Generatorsegment gelöst wurde, befindet sich das Generatorsegment im richtigen Winkel für die Montage des Generatorsegments in der Betriebsposition am Maschinenhaus.

Die erfindungsgemäße Auslösevorrichtung ist ausgebildet, die Generatorkippvorrichtung der Hebekippvorrichtung von dem Generatorsegment ohne die Nachteile der bekannten Hebekippvorrichtungen zu lösen bzw. daran zu befestigen. Insbesondere kann durch die erfindungsgemäße Auslösevorrichtung die Generatorkippvorrichtung ohne Werkzeuge einfach und schnell von dem Generatorsegment entfernt oder an dem Generatorsegment befestigt werden. Zum Lösen der Hebekippvorrichtung von dem Generatorsegment genügt allein das Senken des Generatorsegments mit dem Hauptkran, so dass die Auslösevorrichtung in Kontakt mit dem Boden tritt. Insbesondere muss sich wegen dieser Ausgestaltung der Hebekippvorrichtung zum Lösen der Hebekippvorrichtung von dem Generatorsegment oder zum Befestigen der Hebekippvorrichtung an dem Generatorsegment keine Person in den Gefahrenbereich des am Kran befestigten Generatorsegments begeben. Die erfindungsgemäße Auslösevorrichtung ermöglicht somit nicht nur ein wesentlich sichereres Lösen bzw. Befestigen der Hebekippvorrichtung von bzw. an dem Generatorsegment, sondern erfordert auch weniger Zeit und weniger Personal.

Hierzu ist die Auslösevorrichtung mit der Generatorkippvorrichtung der Hebekippvorrichtung verbunden. Prinzipiell ist die Auslösevorrichtung mit der Generatorkippvorrichtung stoffschlüssig und/oder formschlüssig und/oder kraftschlüssig verbunden. Vorzugsweise sind die Auslösevorrichtung und die Generatorkippvorrichtung mittels einer Schraubenverbindung kraftschlüssig miteinander verbunden.

Dabei ist in bevorzugter Weise vorgesehen, dass die Auslösevorrichtung eine Haupterstreckungsrichtung aufweist, die winklig, insbesondere im Wesentlichen orthogonal, zu einer Haupterstreckungsrichtung der Generatorkippvorrichtung ausgerichtet ist. Vorzugsweise ist bevorzugt, dass, in einem montierten Zustand der Hebekippvorrichtung an dem Generatorsegment, die Haupterstreckungsrichtung der Auslösevorrichtung in Bezug zu der Drehachse des Generators im Wesentlichen einer Radialrichtung entspricht und die Haupterstreckungsrichtung der Generatorkippvorrichtung im Wesentlichen der Axialrichtung entspricht. Insbesondere sind die Auslösevorrichtung und die mit der Auslösevorrichtung verbundene Generatorkippvorrichtung zusammen L-förmig ausgebildet.

Zur Lösung der der Erfindung zugrundeliegenden Aufgabe, umfasst die Auslösevorrichtung mindestens eine Auslöseeinheit, die zum Lösen der Hebekippvorrichtung, insbesondere der Generatorkippvorrichtung, von dem Generatorsegment ausgebildet ist. Bevorzugt weist die Auslösevorrichtung zwei Auslöseeinheiten auf, die parallel zueinander beabstandet angeordnet sind. Insbesondere, wenn die Auslösevorrichtung zwei oder mehrere Auslöseeinheiten aufweist, sind diese vorzugsweise baugleich ausgebildet. Baugleiche Auslöseeinheiten sind im Wesentlichen identisch ausgebildet.

Die mindestens eine Auslöseeinheit ist insbesondere mehrteilig und/oder mehrgliedrig ausgebildet. Zum Lösen der Hebekippvorrichtung von dem Generatorsegment oder zum Befestigen der Hebekippvorrichtung an dem Generatorsegment weist die mindestens eine Auslöseeinheit eine Rahmenvorrichtung, eine Auslöseschwingvorrichtung und eine Koppelvorrichtung auf, die relativ zueinander bewegbar angeordnet sind.

Die Rahmenvorrichtung ist zur Verbindung oder auch Befestigung der Auslösevorrichtung an der Generatorkippvorrichtung der Hebekippvorrichtung ausgebildet. Die Rahmenvorrichtung kann zur stoffschlüssigen und/oder formschlüssigen und/oder kraftschlüssigen Verbindung an der Generatorkippvorrichtung ausgebildet sein. Vorzugsweise ist die Rahmenvorrichtung für eine Schraubenverbindung mit der Generatorkippvorrichtung ausgebildet. Zur Befestigung der Rahmenvorrichtung an der Generatorkippvorrichtung weist die Rahmenvorrichtung beispielsweise eine Befestigungsvorrichtung auf. Die Befestigungsvorrichtung kann beispielsweise als Flansch oder dergleichen ausgebildet sein.

Bevorzugt weist die Generatorkippvorrichtung eine zur Befestigung der Auslösevorrichtung, insbesondere der Rahmenvorrichtung, entsprechend korrespondierende Befestigungsvorrichtung auf. Die Rahmenvorrichtung ist insbesondere starr mit Generatorkippvorrichtung verbunden. Insbesondere ist zu verstehen, dass die Rahmenvorrichtung und die Generatorkippvorrichtung zueinander nicht relativ verschiebbar angeordnet sind. Es kann auch bevorzugt sein, dass die Rahmenvorrichtung und die Generatorkippvorrichtung integral ausgebildet sind.

Zum einfachen und schnellen Lösen der Generatorkippvorrichtung von dem Generatorsegment ist vorgesehen, dass die Auslöseschwingvorrichtung um eine Auslöseschwenkachse schwenkbar an der Rahmenvorrichtung angeordnet ist. Alternativ kann die Auslöseschwingvorrichtung an der Rahmenvorrichtung auch entlang einer Linearführung translatorisch verschiebbar angeordnet sein, um die Generatorkippvorrichtung von dem Generatorsegment einfach und schnell zu lösen.

Die Auslöseschwingvorrichtung ist also ausgebildet, die Generatorkippvorrichtung mit der Auslösevorrichtung von dem Generatorsegment zu lösen. Zum Lösen der Generatorkippvorrichtung mit der Auslösevorrichtung von dem Generatorsegment wird die Auslöseschwingvorrichtung relativ zu der Rahmenvorrichtung und der Generatorkippvorrichtung und somit auch des Generatorsegments bewegt, und zwar mindestens bis diese mit dem Generatorsegment in Kontakt tritt. Tritt die Auslösevorrichtung mit dem Generatorsegment in Kontakt oder befindet sich die Auslösevorrichtung mit dem Generatorsegment in Kontakt, ist in dieser Lage der Auslösevorrichtung in bevorzugter Weise eine Auslöselage zu verstehen. Die Auslösevorrichtung tritt insbesondere derart mit dem Generatorsegment in Kontakt, dass eine Kraft im Wesentlichen in der Axialrichtung wirkt, welche das Lösen der Generatorkippvorrichtung von dem Generatorsegment bewirkt. Somit wird durch eine Lageänderung der Auslöseschwingvorrichtung in die Auslöselage das Lösen der Generatorkippvorrichtung von dem Generatorsegment ausgelöst.

Die Auslöseschwingvorrichtung wirkt insbesondere als eine Art mechanischer Hebel, der ausgebildet ist, die Generatorkippvorrichtung samt der Auslösevorrichtung von dem Generatorsegment zu lösen. Vorzugsweise weist die Auslöseschwingvorrichtung ein Auslöseelement auf oder bildet dieses aus, welches zum Lösen der Generatorkippvorrichtung von dem Generatorsegment ausgebildet ist und in der Auslöselage mit dem Generatorsegment in Kontakt tritt. Das Auslöseelement ist beispielsweise ein Gummielement oder dergleichen, um Beschädigungen am Generatorsegment zu vermeiden.

Die Lageveränderung der Auslöseschwingvorrichtung wird durch die Koppelvorrichtung ausgelöst. Hierzu ist die Koppelvorrichtung sowohl gegenüber der Rahmenvorrichtung als auch gegenüber der Auslöseschwingvorrichtung relativ bewegbar angeordnet. Es kann dabei vorgesehen sein, dass die Koppelvorrichtung und die Auslöseschwingvorrichtung schwenkbar zueinander gelagert sind. Alternativ kann vorgesehen sein, dass die Koppelvorrichtung und die Auslöseschwingvorrichtung translatorisch verschiebbar zueinander gelagert sind. Vorzugsweise ist vorgesehen, dass die Auslöseschwingvorrichtung sowohl gegenüber der Rahmenvorrichtung als auch gegenüber der Koppelvorrichtung eine Schwenkbewegung durchführt.

Es ist vorgesehen, dass die Auslöseschwingvorrichtung in Abhängigkeit einer Lage der Koppelvorrichtung in Bezug zu der Rahmenvorrichtung zwischen der Auslöselage und einer von der Auslöselage verschiedenen Ausgangslage hin und her bewegbar ist. Hierbei bewirkt eine Relativbewegung, insbesondere eine Relativverschiebung, der Koppelvorrichtung eine Lageveränderung der Koppelvorrichtung gegenüber der Auslöseschwingvorrichtung. Diese Lageveränderung der Koppelvorrichtung bewirkt wiederum eine Relatiwerschiebung der Auslöseschwingvorrichtung, welche eine Lageveränderung der Auslöseschwingvorrichtung bedingt.

Die Koppelvorrichtung führt eine Relativbewegung aus, sobald die Koppelvorrichtung beim Ablassen des Generatorsegments mit dem Hauptkran den Boden berührt. Hierzu weist die Koppelvorrichtung vorzugsweise ein Fußelement auf, welches für den Kontakt mit dem Boden ausgebildet ist und beim Ablassen des Generatorsegments als erstes den Boden berührt. Sobald die Koppelvorrichtung den Boden berührt, steht die Koppelvorrichtung in vertikaler Richtung im Wesentlichen fest, d.h. das lediglich das Generatorsegment mit der daran angeordneten Generatorkippvorrichtung, Rahmenvorrichtung und Auslöseschwingvorrichtung in vertikaler Richtung weiter abgesenkt wird bzw. werden kann. Dabei wird die Absenkbewegung der Auslöseschwingvorrichtung bedingt durch die feststehende Koppelvorrichtung von einer Lageänderung überlagert, welche zum Lösen der Generatorkippvorrichtung von dem Generatorsegment führt.

Insbesondere verändert sich die Lage der Auslöseschwingvorrichtung somit ab dem Bodenkontakt der Koppelvorrichtung ausgehend von einer Ausgangslage zu einer Auslöselage, die von der Ausgangslage verschieden ist. Es ist zu verstehen, dass die Auslöseschwingvorrichtung in der Ausgangslage mit dem Generatorsegment vorzugsweise nicht im Kontakt steht. Es kann auch bevorzugt sein, dass die Auslöseschwingvorrichtung in der Ausgangslage mit dem Generatorsegment im Kontakt steht, ohne eine Kraft in der Axialrichtung des Generators bzw. des Generatorsegments zu übertragen. In der Auslöselage ist es bevorzugt, dass die Auslöseschwingvorrichtung mit dem Generatorsegment im Kontakt steht. Vorzugsweise überträgt die Auslöseschwingvorrichtung in der Auslöselage eine Kraft in Axialrichtung des Generators bzw. des Generatorsegments, um die Generatorkippvorrichtung von dem Generator bzw. dem Generatorsegment zu lösen. Insbesondere ist die Auslöseschwingvorrichtung in der Ausgangslage ausgebildet, kein Lösen der Generatorkippvorrichtung von dem Generatorsegment zu bewirken. Ferner kann die Auslöseschwingvorrichtung vorzugsweise ausgebildet sein, während einer Bewegung oder Lageänderung der Auslöseschwingvorrichtung von der Ausgangslage in Richtung der Auslöselage das Lösen der Generatorkippvorrichtung von dem Generatorsegment zu bewirken. Vorzugsweise überträgt die Auslöseschwingvorrichtung während einer Bewegung oder Lageänderung der Auslöseschwingvorrichtung von der Ausgangslage in Richtung der Auslöselage in Axialrichtung eine Kraft, die auf das Generatorsegment bzw. den Generator wirkt, um die Generatorkippvorrichtung von dem Generatorsegment bzw. dem Generator zu lösen.

Während des Lösens oder zum Lösen der Generatorkippvorrichtung von dem Generatorsegment weist die Koppelvorrichtung vorzugsweise eine Haupterstreckung in vertikaler Richtung auf. Insoweit entspricht die Haupterstreckungsrichtung der Koppelvorrichtung in Bezug auf das Generatorsegment im montierten Zustand der Hebekippvorrichtung Wesentlichen der Radialrichtung. Die Koppelvorrichtung ist vorzugsweise stabförmig ausgebildet.

Es ist insoweit lediglich ein Ablassen des Generatorsegments mit dem Hauptkran erforderlich, um die Generatorkippvorrichtung mittels der Auslösevorrichtung von dem Generatorsegment zu lösen. Die erfindungsgemäße Auslösevorrichtung ermöglicht somit eine einfache und schnelle Montage sowie Demontage der Hebekippvorrichtung von dem Generatorsegment. Allein durch entsprechendes Heben und Senken des Generatorsegments lässt sich die Hebekippvorrichtung mittels der Auslösevorrichtung ohne zusätzliche Werkzeuge an dem Generatorsegment befestigen bzw. lösen.

Es ist vorgesehen, dass die mindestens eine Auslöseeinheit eine Führungsschwingvorrichtung aufweist, die beabstandet zu der Auslöseschwingvorrichtung an der Rahmenvorrichtung schwenkbar um eine Führungsschwenkachse angeordnet ist.

Die Führungsschwingvorrichtung ist dazu ausgebildet, die Relativverschiebung der Koppelvorrichtung gegenüber der Rahmenvorrichtung zu führen. Insbesondere ermöglicht die Führungsschwingvorrichtung eine verbesserte Lageveränderung der Auslöseschwingvorrichtung. Dies wird im Wesentlichen dadurch erreicht, dass die Koppelvorrichtung gegenüber der Rahmenvorrichtung an zwei Punkten verschiebbar gelagert ist. Insbesondere führt die Koppelvorrichtung durch den zweiten Koppelpunkt an die Rahmenvorrichtung über die Führungsschwingvorrichtung eine reproduzierbare Lageänderung durch, sobald die Koppelvorrichtung beim Absenken des Generatorsegments mittels des Krans auf den Boden trifft. Dies führt zu einer verbesserten Kontrolle des Lösens der Generatorkippvorrichtung und erhöht die Sicherheit im Bereich des abzulassenden Generatorsegments.

In dieser bevorzugten Ausführungsform ist vorzugsweise vorgesehen, dass die Rahmenvorrichtung stabförmig ausgebildet ist. Insbesondere ist bevorzugt, dass die Rahmenvorrichtung an einem im Betrieb der Auslösevorrichtung oberen Ende die Befestigungsvorrichtung aufweist, ausgehend von der sich die Rahmenvorrichtung stabförmig erstreckt.

Vorzugsweise erstrecken sich die Rahmenvorrichtung und die Führungsschwingvorrichtung im Wesentlichen parallel zueinander. Insbesondere ist vorgesehen, dass die Rahmenvorrichtung und die Führungsvorrichtung relativ verschiebbar, insbesondere translatorisch verschiebbar, zueinander angeordnet sind. Insbesondere ist vorgesehen, dass die Führungsschwingvorrichtung an der Rahmenvorrichtung und an der Koppelvorrichtung schwenkbar und/oder translatorisch verschiebbar gelagert ist.

Es ist insbesondere bevorzugt, dass sowohl die Führungsschwingvorrichtung als auch die Auslöseschwingvorrichtung als Schwingen ausgebildet sind. Vorzugsweise weisen die Schwingen der Führungsschwingvorrichtung und der Auslöseschwingvorrichtung dieselbe Länge auf.

Nach einer ferner bevorzugten Ausführungsform der Auslösevorrichtung ist es bevorzugt, dass die Koppelvorrichtung die Auslöseschwingvorrichtung und die Führungsschwingvorrichtung miteinander koppelt, wobei die Koppelvorrichtung an der Führungsschwingvorrichtung bewegbar angeordnet ist. Insbesondere kann vorzugsweise vorgesehen sein, dass die Führungsschwingvorrichtung an der Koppelvorrichtung translatorisch verschiebbar angeordnet ist. Alternativ kann bevorzugt sein, dass die Koppelvorrichtung an der Führungsschwingvorrichtung translatorisch verschiebbar angeordnet ist.

Weiterhin ist gemäß einer Ausführungsform bevorzugt, dass die die Koppelvorrichtung an der Führungsschwingvorrichtung um eine zweite Koppelschwenkachse schwenkbar angeordnet ist. Insbesondere ist bevorzugt, dass die Koppelvorrichtung und die Führungsschwingvorrichtung zueinander schwenkbar verbunden sind. Hierbei kann die die Koppelvorrichtung relativ zu der Führungsschwingvorrichtung schwenken oder drehen und umgekehrt.

Ferner ist es insbesondere gemäß einer Fortbildung der Auslösevorrichtung vorgesehen, dass die mindestens eine Auslöseeinheit als Parallelkurbelgetriebe oder Doppelschwinge ausgebildet ist.

Weiterhin ist nach einer bevorzugten Fortbildung vorgesehen, dass die mindestens eine Auslöseeinheit eine Befestigungsvorrichtung aufweist, die an der Rahmenvorrichtung angeordnet ist und zur Befestigung der Auslösevorrichtung an der Generatorkippvorrichtung der Hebekippvorrichtung ausgebildet ist. Vorzugsweise ist die Befestigungsvorrichtung für eine kraftschlüssige und/oder stoffschlüssige und/oder formschlüssige Befestigung der Auslösevorrichtung an der Generatorkippvorrichtung ausgebildet. Insbesondere ist eine Schraubenverbindung zur Verbindung der Auslösevorrichtung an der Generatorkippvorrichtung vorgesehen.

Gemäß einer weiteren Fortbildung der Auslösevorrichtung ist es bevorzugt, dass die mindestens eine Auslöseeinheit als Knicksteife ausgebildet ist, wobei vorzugsweise die Rahmenvorrichtung und/oder die Koppelvorrichtung als Knicksteife ausgebildet sind.

Bei einer als Knicksteife ausgebildeten mindestens einen Auslöseeinheit ist insbesondere die Gefahr des Knickens oder Ausbeulens der mindestens einen Auslöseeinheit minimiert. Vorzugsweise weist die als Knicksteife ausgebildete mindestens eine Auslöseeinheit eine Rahmenvorrichtung und/oder eine Koppelvorrichtung auf, die beispielsweise einen I-förmigen oder T-förmigen Querschnitt aufweisen. Ferner können die Rahmenvorrichtung und/oder die Koppelvorrichtung jeweils parallel beabstandet angeordnete stabförmige Elemente aufweisen oder auch durch einen polygonalen oder kreisförmigen Hohlquerschnitt ausgebildet sein. Die als Knicksteife ausgebildete mindestens eine Auslöseeinheit verlängert jedenfalls in vorteilhafter Weise die Lebensdauer der Auslösevorrichtung. Ferner führt die höhere Steifigkeit zu einer präziseren Lageveränderung der Auslöseschwingvorrichtung unter Last und somit zu einem verbesserten Lösen der Generatorkippvorrichtung von dem Generatorsegment.

Des Weiteren ist gemäß einer bevorzugten Fortbildung vorgesehen, dass die Auslösevorrichtung zwei Auslöseeinheiten aufweist, die beabstandet zueinander angeordnet sind, so dass die entsprechenden Schwenkachsen der jeweiligen Auslöseeinheiten koaxial zueinander angeordnet sind. Die Verwendung von zwei Auslöseeinheiten erhöht die Steifigkeit der Auslösevorrichtung wesentlich. Insbesondere steigt hierdurch auch die Lebensdauer der Auslösevorrichtung. Ferner reduziert dies die Gefahr, dass die Auslösevorrichtung plötzlich versagt.

Nach einer weiteren bevorzugten Ausführungsform weist die Auslösevorrichtung eine Führungsschwingenverbindungseinheit auf, welche mit den beiden Führungsschwingvorrichtungen und/oder den beiden Auslöseschwingvorrichtungen der beiden Auslöseeinheiten verbunden, insbesondere drehmomentfest verbunden, ist. Ergänzend oder alternativ weist die Auslösevorrichtung eine Rahmenverbindungseinheit auf, welche mit den beiden Rahmenvorrichtungen der beiden Auslöseeinheiten verbunden, insbesondere fest verbunden, ist. Die Kopplung der beiden Auslöseeinheiten wirkt versteifend für die Auslösevorrichtung. Somit nimmt die Gefahr ab, dass sich die Auslösevorrichtung schief stellt und der Generator bzw. das Generatorsegment nur unvollständig von der Generatorkippvorrichtung gelöst wird. Diese Gefahr wird insbesondere minimiert, wenn der Boden uneben ist, wie dies beispielsweise bei einem Schotterboden oder dergleichen der Fall ist.

Gemäß einem weiteren Aspekt der Erfindung wird die eingangs genannte Aufgabe durch eine Hebekippvorrichtung nach Anspruch 8 zum Heben und Kippen eines Generatorsegments, insbesondere eines Generatorsegments einer Windenergieanlage, gelöst.

Hierzu weist die Hebekippvorrichtung eine Generatorkippvorrichtung und eine Auslösevorrichtung auf. Die Generatorkippvorrichtung ist zum Heben und Kippen des Generatorsegments ausgebildet. Es ist vorgesehen, dass die Generatorkippvorrichtung zum Heben und/oder Kippen des Generatorsegments an einer Unterseite des Generatorsegments an einer Außenumfangsfläche und/oder einer ersten Stirnseite und/oder einer zweiten Stirnseite mit dem Generatorsegment lösbar verbindbar ist. Die Auslösevorrichtung ist gemäß dem zuvor beschriebenen Aspekt oder gemäß einer der zuvor beschriebenen Fortbildungen ausgebildet und mit der Generatorkippvorrichtung verbunden.

Gemäß einer bevorzugten Ausführungsform der Hebekippvorrichtung ist vorgesehen, dass die Generatorkippvorrichtung in einer Axialrichtung längenveränderbar ausgebildet ist, um die Erstreckung der Generatorkippvorrichtung in Axialrichtung an die Erstreckung des Generatorsegments anzupassen. Dies hat insbesondere den Vorteil, dass die Generatorkippvorrichtung für Generatoren unterschiedlicher Größe verwendet werden kann.

Es ist bevorzugt, dass die Generatorkippvorrichtung mehrteilig ausgebildet ist. Insbesondere weist die Generatorkippvorrichtung eine erste Generatorkippeinheit und eine zweite Generatorkippeinheit auf, die miteinander verbunden werden. Soll die Länge der Generatorkippvorrichtung vergrößert werden, können zwischen die erste und zweite Generatorkippeinheit Distanzscheiben angeordnet werden. Je mehr Distanzscheiben vorgesehen werden, desto größer wird die Erstreckung der Generatorkippvorrichtung in der Axialrichtung. Die Erstreckung ist in Axialrichtung minimal, wenn die erste und zweite Generatorkippeinheit ohne Distanzscheiben direkt aneinander angeordnet werden.

Ferner ist nach einer Fortbildung vorzugsweise vorgesehen, dass die Hebekippvorrichtung eine Generatorhebevorrichtung aufweist, die zum Heben und Kippen des Generatorsegments ausgebildet ist, wobei die Generatorhebevorrichtung zum Heben und/oder Kippen des Generatorsegments an einer Oberseite des Generatorsegments an einer Außenumfangsfläche und/oder einer ersten Stirnseite und/oder einer zweiten Stirnseite mit dem Generatorsegment lösbar verbindbar ist.

Insbesondere ist die Generatorhebevorrichtung an eine bestimmte Breite des zu hebenden und/oder zu kippenden Generators bzw. Generatorsegments angepasst. Insofern ist in diesem Fall bevorzugt, dass die Generatorhebevorrichtung in Axialrichtung nicht längenveränderlich ausgebildet ist. Es kann aber auch bevorzugt sein, dass die Generatorhebevorrichtung in einer Axialrichtung längenveränderbar ausgebildet, um die Erstreckung der Generatorhebevorrichtung in Axialrichtung an die Erstreckung des Generatorsegments anzupassen. Dies hat insbesondere den Vorteil, dass die Generatorhebevorrichtung für Generatoren unterschiedlicher Größe verwendet werden kann.

Es ist bevorzugt, dass die Generatorhebevorrichtung mehrteilig ausgebildet ist. Insbesondere weist die Generatorhebevorrichtung eine erste Generatorhebeeinheit und eine zweite Generatorhebeeinheit auf, die miteinander verbunden werden. Soll die Länge der Generatorhebevorrichtung vergrößert werden, können zwischen die erste und zweite Generatorhebeeinheit Distanzscheiben angeordnet werden. Insbesondere ist es bevorzugt, dass die Generatorhebevorrichtung eine oder mehrere Distanzscheiben aufweist, um die Erstreckung der Generatorhebevorrichtung in Axialrichtung an die Erstreckung des Generatorsegments anzupassen. Je mehr Distanzscheiben vorgesehen werden, desto größer wird die Erstreckung der Generatorhebeeinheit in der Axialrichtung. Die Erstreckung ist in Axialrichtung minimal, wenn die erste und zweite Generatorhebeeinheit ohne Distanzscheiben direkt aneinander angeordnet werden.

Weiterhin ist nach einer Fortbildung bevorzugt, dass die Generatorkippvorrichtung und/oder die Generatorhebevorrichtung eine Hebeeinheit aufweist, die zur Verbindung mit einem Kran oder dergleichen ausgebildet ist. Die Hebeeinheit umfasst beispielsweise Ösen, Bolzen, Zapfen, Bohrungen oder dergleichen.

Ergänzend oder alternativ ist es bevorzugt, dass die Generatorkippvorrichtung und/oder die Generatorhebevorrichtung eine Fixiervorrichtung aufweist, die zur lösbaren Fixierung der Hebekippvorrichtung an dem Generatorsegment ausgebildet ist. Die Fixiervorrichtung umfasst beispielsweise Ösen, Bolzen, Zapfen, Bohrungen oder dergleichen.

Nach einer weiteren bevorzugten Fortbildung ist vorgesehen, dass die Fixiervorrichtung eine erste Fixiereinheit und eine zu der ersten Fixiereinheit in der Axialrichtung beabstandet angeordnete zweite Fixiereinheit aufweist. Ergänzend oder alternativ ist vorzugsweise der Abstand zwischen der ersten und zweiten Fixiereinheit in Abhängigkeit der Erstreckung des zu hebenden und/oder zu kippenden Generatorsegments in Axialrichtung veränderbar.

Ferner ist ergänzend oder alternativ vorzugsweise die erste Fixiereinheit von der zweiten Fixiereinheit verschieden. Besonders bevorzugt ist es, dass die erste Fixiereinheit eine oder mehrere bohrungsartige Öffnungen aufweist, die ausgebildet sind, die an dem Generatorsegment angeordneten ersten Fixierbolzen aufzunehmen, insbesondere durch Einstecken aufzunehmen.

Ergänzend oder alternativ ist in bevorzugter Weise ferner vorgesehen, dass die zweite Fixiereinheit eine oder mehrere Fixiernuten aufweist, die ausgebildet sind, an dem Generatorsegment angeordnete zweite Fixierbolzen aufzunehmen, insbesondere einzulegen. Besonders bevorzugt ist es, dass die erste Fixiereinheit einen oder mehrere Bolzen aufweist, die ausgebildet sind in an dem Generatorsegment vorgesehene bohrungsartige Öffnungen eingeführt zu werden, insbesondere eingesteckt zu werden.

Die Fixierbolzen übertragen Kräfte bzw. Lasten in Radialrichtung und in Umfangsrichtung. Insbesondere übertragen die Fixierbolzen keine Zugkräfte. Vorzugsweise sind die Fixierbolzen zur Übertragung von Schubkräften ausgebildet. Dies hat insbesondere den Vorteil, dass keine zugbelasteten Elemente versagen können und eine eindeutige Übertragung jeder Kraftkomponente eine eindeutige Funktion sicherstellt und sichere Auslegung ermöglicht.

Ergänzend oder alternativ ist ferner bevorzugt, dass die zweite Fixiereinheit eine oder mehrere Bolzen aufweist, die ausgebildet sind, in an dem Generatorsegment angeordnete Fixiernuten aufgenommen zu werden, insbesondere eingelegt zu werden.

Hierdurch lässt sich in einfacher Weise ein Formschluss zwischen dem zu hebenden und zu kippenden Generatorsegment herstellen, der schnell und sicher wieder gelöst werden kann.

Die erfindungsgemäße Hebekippvorrichtung und deren mögliche Fortbildungen weisen Merkmale auf, welches es insbesondere dafür geeignet machen, mit einer erfindungsgemäßen zuvor beschriebenen Auslösevorrichtung und/oder mit einem erfindungsgemäßen Verfahren gemäß der verschiedenen Aspekte und ihrer verschiedenen Fortbildungen durchgeführt zu werden.

Zu den Vorteilen, Ausführungsvarianten und Ausführungsdetails der Hebekippvorrichtung und deren mögliche Fortbildungen wird auf die vorangegangene Beschreibung zu den entsprechenden Merkmalen der zuvor beschriebenen erfindungsgemäßen Auslösevorrichtung und/oder auf die nachfolgende Beschreibung zu den entsprechenden Merkmalen des im Folgenden beschriebenen erfindungsgemäßen Verfahrens verwiesen.

Gemäß einem weiteren Aspekt der Erfindung wird die eingangs genannte Aufgabe durch ein Verfahren zum Heben und Kippen eines Generatorsegments, insbesondere eines Generatorsegments einer Windenergieanlage gelöst.

Das erfindungsgemäße Verfahren umfasst mehrere Schritte. Es ist zunächst ein Bereitstellen des Generatorsegments in einer Transportposition vorgesehen. Anschließend wird eine Hebekippvorrichtung gemäß dem vorangehend beschriebenen Aspekt oder gemäß den zuvor beschriebenen Fortbildungen der Hebekippvorrichtung an dem in der Transportposition bereitgestellten Generatorsegment befestigt. Es folgt dann ein Anheben des Generatorsegments an der Hebekippvorrichtung und ein Drehen des angehobenen Generatorsegments in eine erste Zwischenposition, die von der Transportposition verschieden ist. Hierzu wird die Oberseite des Generatorsegments beispielsweise mittels eines Hauptkrans nach oben gezogen und ggf. die Unterseite mit dem Hilfskran leicht abgelassen. Während die Drehachse des Generatorsegments in der Transportposition im Wesentlichen vertikal ausgerichtet ist, erstreckt sich die Drehachse nach der Drehung vornehmlich im Wesentlichen in einer horizontalen Ebene.

Es wird die Generatorkippvorrichtung dann in eine zweite Zwischenposition bewegt, in der sich die zweite Fixiereinheit sich von dem Generatorsegment löst. Die zweite Zwischenposition ist von der ersten Zwischenposition und/oder der Transportposition verscheiden. In dieser zweiten Zwischenposition ist die Generatorkippvorrichtung insbesondere einseitig von dem Generatorsegment auf der zweiten Stirnseite gelöst. In der zweiten Zwischenposition steht die Koppelvorrichtung vorzugsweise noch nicht im Kontakt mit dem Boden.

Es folgt schließlich ein Absetzen des Generatorsegments ausgehend von der zweiten Zwischenposition in eine Auslöseposition des Generatorsegments, die von der Transportposition und der ersten und zweiten Zwischenposition verschieden ist, so dass die Auslöseschwingvorrichtung der Auslösevorrichtung von der Ausgangslage in die Auslöselage bewegt wird, so dass die Auslöseschwingvorrichtung die lösbar mit dem Generatorsegment verbundene Generatorkippvorrichtung von dem Generatorsegment löst. Insbesondere löst sich in der Auslöseposition die erste Fixiereinheit von dem ersten Fixierbolzen und somit die Generatorkippvorrichtung von dem Generatorsegment.

Gemäß einer bevorzugten Fortbildung weist das Verfahren ferner folgende Schritte auf: Ein Entfernen der von dem Generatorsegment gelösten Generatorkippvorrichtung der Hebekippvorrichtung; und/oder ein Anheben des Generatorsegments mittels der Generatorhebevorrichtung von der Auslöseposition in eine Betriebsposition, die von der Auslöseposition verschieden ist; und/oder eine Montage des Generatorsegments an einer Gondel der Windenergieanlage in der Betriebsposition.

Das erfindungsgemäße Verfahren und dessen mögliche Fortbildungen weisen Merkmale auf, welche es insbesondere dafür geeignet machen, mit einer erfindungsgemäßen zuvor beschriebenen Auslösevorrichtung und/oder mit einer erfindungsgemäßen Hebekippvorrichtung gemäß der verschiedenen Aspekte und ihrer verschiedenen Fortbildungen durchgeführt zu werden.

Zu den Vorteilen, Ausführungsvarianten und Ausführungsdetails des Verfahrens und dessen mögliche Fortbildungen wird auf die vorangegangene Beschreibung zu den entsprechenden Merkmalen der zuvor beschriebenen erfindungsgemäßen Auslösevorrichtung und/oder erfindungsgemäßen Hebekippvorrichtung verwiesen.

Gemäß einem weiteren Aspekt der Erfindung wird die eingangs genannte Aufgabe durch ein Verfahren zur Montage einer zuvor beschriebenen Hebekippvorrichtung an einem demontierten Generatorsegment, insbesondere an einem demontierten Generatorsegment einer Windenergieanlage, gelöst.

Das Verfahren umfasst ein Bereitstellen der zuvor beschriebenen Hebekippvorrichtung auf einem Boden und ein Ablassen des demontierten Generatorsegments mit einem Hauptkran in eine Montageposition. Es folgt ein Einführen von ersten Fixierbolzen, die an dem Generatorsegment angeordnet sind, in die erste Fixiereinheit, die eine oder mehrere bohrungsartige Öffnungen aufweist. Anschließend wird das Generatorsegment an der Hebekippvorrichtung an einem Hilfskran angehoben, bis die zweite Fixiereinheit, die eine oder mehrere Fixernuten aufweist, die an dem Generatorsegment angeordneten zweiten Fixierbolzen aufnimmt. Dann wird das Generatorsegment in die Transportposition geschwenkt und das in die Transportposition geschwenkte Generatorsegment, beispielsweise auf einem Lastkraftwagen, abgelegt.

Das erfindungsgemäße Verfahren und dessen mögliche Fortbildungen weisen Merkmale auf, welche es insbesondere dafür geeignet machen, mit einer erfindungsgemäßen zuvor beschriebenen Auslösevorrichtung und/oder mit einer erfindungsgemäßen Hebekippvorrichtung gemäß der verschiedenen Aspekte und ihrer verschiedenen Fortbildungen durchgeführt zu werden.

Zu den Vorteilen, Ausführungsvarianten und Ausführungsdetails des Verfahrens und dessen mögliche Fortbildungen wird auf die vorangegangene Beschreibung zu den entsprechenden Merkmalen der zuvor beschriebenen erfindungsgemäßen Auslösevorrichtung und/oder erfindungsgemäßen Hebekippvorrichtung verwiesen.

Bevorzugte Ausführungsformen der Erfindung werden beispielhaft anhand der beiliegenden Figuren beschrieben. Es zeigen:
- Figur 1:: eine beispielhafte Ausführungsform einer Windenergieanlage;
- Figuren 2a, 2b:: eine Seitenansicht eines Generatorsegments mit einer daran angeordneten Hebekippvorrichtung in einer bevorzugten Ausführungsform;
- Figuren 3a, 3b:: eine weitere bevorzugte Ausführungsform einer Hebekippvorrichtung mit einer Auslösevorrichtung;
- Figuren 4a, 4b:: eine Detailansicht einer ersten und zweiten Fixiereinheit einer Hebekippvorrichtung in einer bevorzugten Ausführungsform;
- Figur 5:: eine beispielhafte Ausführungsform einer Auslösevorrichtung in einer dreidimensionalen Ansicht;
- Figuren 6a-6c:: die in Figur 5 beispielhaft dargestellte Ausführungsform der Auslösevorrichtung in einer Vorderansicht, einer Seitenansicht und einer Rückansicht;
- Figur 7:: ein schematisches Blockdiagramm einer bevorzugten Ausführungsform eines Verfahrens zum Heben und Kippen eines Generatorsegments; und
- Figuren 8a-8d:: eine schematische Darstellung des Generatorsegments mit einer daran angeordneten Generatorkippvorrichtung in einer ersten und zweiten Zwischenposition sowie einer Auslöseposition.

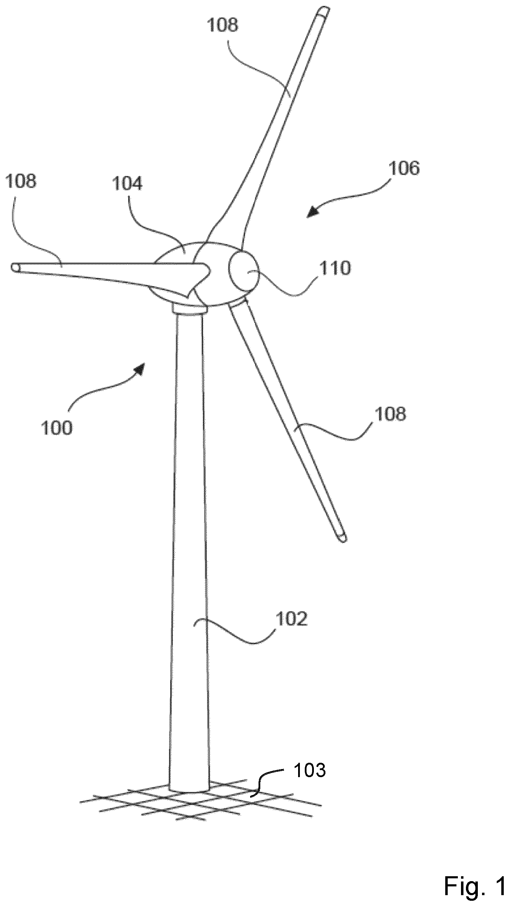

Figur 1 zeigt eine Windenergieanlage 100 mit einem Turm 102 und einer Gondel 104. Der Turm 102 erstreckt sich ausgehend von einem im Boden 103 eingelassenen Fundament bis zu der Gondel 104. An der Gondel 104 ist ein aerodynamischen Rotor 106 mit drei Rotorblättern 108 und einem Spinner 110 angeordnet. Der aerodynamische Rotor 106 wird im Betrieb durch den Wind um eine Drehachse in eine Drehbewegung versetzt und treibt dadurch einen am Maschinenhaus befestigten Generator (nicht dargestellt) in der Gondel 104 an. In dieser Anordnung befindet sich der Generator in einer Betriebsposition. Der Generator umfasst einen elektrodynamischen Rotor, der relativ zu einem elektrodynamischen Stator in Abhängigkeit des aerodynamischen Rotors 106 um die Drehachse rotiert. Durch die Relativbewegung des elektrodynamischen Rotors relativ zu dem elektrodynamischen Stator wandelt der Generator die Energie des Windes in elektrische Energie. Der Generator bzw. aerodynamische Rotor ist in der Betriebsposition derart angeordnet, dass die Drehachse des Generators im Wesentlichen in einer horizontalen Ebene bzw. leicht gegenüber der horizontalen Ebenen geneigt ausgerichtet ist.

Der Generator kann aus einem Generatorsegment 3 oder mehreren Generatorsegmenten 3 bestehen. Ein Generatorsegment 3 umfasst dabei sowohl ein Rotorsegment als auch ein Statorsegment. Weist der Generator mehrere Generatorsegmente auf, werden die Generatorsegmente 3 an Trennschnittstellen miteinander verbunden. Ob ein Generator aus einem einzigen Generatorsegment 3 besteht oder aus mehreren Generatorsegmenten 3 zusammengesetzt ist, hängt im Wesentlichen von dessen Abmessungen und Masse ab. Insbesondere große und schwere Generatoren werden transportbedingt und wegen der zulässigen Traglast von Kränen segmentiert ausgebildet.

Für die Montage wird der Generator beziehungsweise dessen Generatorsegment 3 mit mehreren Kränen von dem Boden 103 auf die Turmspitze befördert. Da die Generatorsegmente 3 in einer Transportposition liegend angeliefert werden, müssen diese zuvor ausgehend von der Transportposition um etwa 90° bis 100° gekippt werden, so dass das Generatorsegment 3 entsprechend der Ausrichtung der Drehachse in der Betriebsposition orientiert ist.

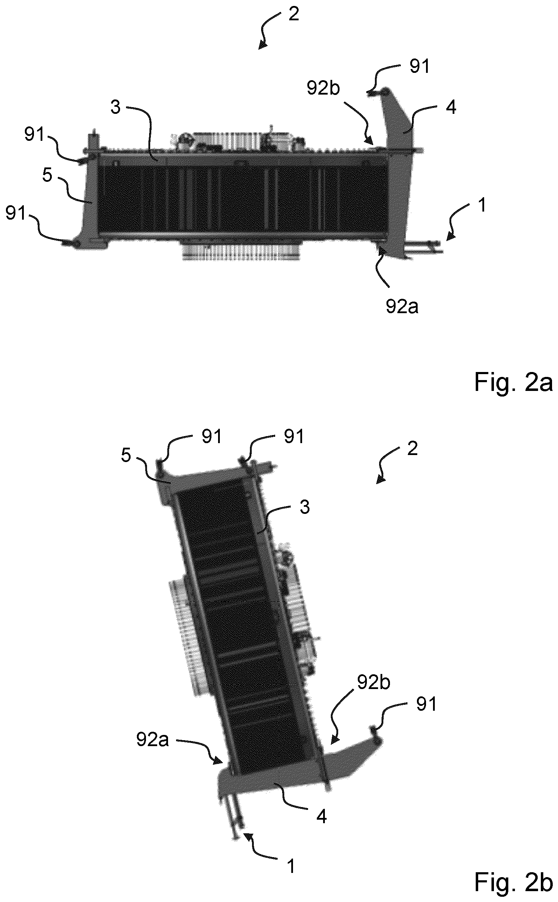

Die Figuren 2a und 2b zeigen eine Seitenansicht eines Generators einer Windenergieanlage 100 mit einer daran angeordneten Hebekippvorrichtung 2 in einer bevorzugten Ausführungsform. Der dort beispielhaft dargestellte Generator besteht aus einem einzigen Generatorsegment 3. Die nachfolgende Beschreibung gilt entsprechend auch für einen Generator, der aus mehreren Generatorsegmenten 3 zusammengesetzt ist. Figur 2a zeigt das Generatorsegment 3 in einer Transportposition. In Figur 2b ist das Generatorsegment 3 in einer gekippten Position dargestellt, in der das Generatorsegment 3 entsprechend der Ausrichtung der Drehachse in Bezug zu der Transportposition um etwa 80° geschwenkt ausgerichtet ist.

Mit Hilfe der erfindungsgemäßen Hebekippvorrichtung 2 wird das Generatorsegment 3 angehoben und gekippt. Die Hebekippvorrichtung 2 ist entsprechend zum Heben und Kippen des Generatorsegments 3 ausgebildet. Zum Heben bzw. Senken und zum Kippen des Generatorsegments 3 weist die Hebekippvorrichtung 2 eine Generatorkippvorrichtung 4 und eine Generatorhebevorrichtung 5 auf, die an der Außenseite des Generatorsegments 3 sowohl an dessen Außenumfangsfläche sowie an den beiden Stirnflächen befestigt werden.

Die Generatorhebevorrichtung 5 wird derart an der Außenseite des Generators angebracht, dass dieser sich an einer Oberseite des Generatorsegments, einer 12-Uhr-Position, befindet, wenn dieser mit dem Kran angehoben oder abgelassen wird. Zum Heben und Kippen des Generatorsegments wird die Generatorhebevorrichtung 5 sowohl an der Außenumfangsfläche als auch an den beiden Stirnflächen des Generatorsegments 3 befestigt. Die Generatorhebevorrichtung 5 wird mit dem Generatorsegment 3 derart verbunden, dass die Generatorhebevorrichtung 5 nach der Montage des Generators oder aber nach der Demontage des Generatorsegments 3 gelöst werden kann. Hierzu ist eine entsprechende Fixiervorrichtung 92 mit einer ersten und zweiten Fixiereinheit vorgesehen, die in Axialrichtung des Generatorsegments 3 beabstandet zueinander angeordnet sind. Der Abstand zwischen den beiden Fixiereinheiten hängt hierbei von der Breite des zu hebenden und zu kippenden Generatorsegments ab.

Die Generatorhebevorrichtung 5 kann längenveränderlich ausgebildet werden. Hierdurch lässt sich die Generatorhebevorrichtung 5 an die Breite des zu hebenden Generatorsegments anpassen. Hierzu kann die Generatorhebevorrichtung 5 zweigeteilt ausgebildet sein, so dass sie eine erste und zweite Generatorhebeeinheit aufweist. In Abhängigkeit der Breite des Generatorsegments können dann zwischen der ersten und zweiten Generatorhebeeinheit Distanzscheiben angeordnet werden. Je mehr Distanzscheiben vorgesehen werden, umso breitere Generatorsegmente lassen sich an der Generatorhebevorrichtung 5 befestigen. Üblicherweise werden die beiden Generatorhebeeinheiten und die Distanzscheiben durch Schrauben kraftschlüssig miteinander verbunden. Es kann auch bevorzugt sein, die Generatorhebevorrichtung 5 nicht längenveränderlich auszubilden, insbesondere keine Distanzscheiben vorzusehen.

Die Generatorhebevorrichtung 5 weist zum Anschlagen von Schlingen des Hauptkrans eine Rahmenstruktur auf, an der eine Hebeeinheit 91 angeordnet ist. Vorliegend sind Schäkel als Hebeeinheit 91 vorgesehen, die an der Rahmenstruktur drehbar gelagert befestigt sind und sowohl in Axialrichtung als auch in Umfangsrichtung zueinander beabstandet angeordnet sind. Hierdurch wird die Last des Generators beim Heben und Kippen optimal von der Generatorhebevorrichtung 5 auf den Hauptkran übertragen.

Die Generatorkippvorrichtung 4 wird hingegen derart an der Außenseite des Generatorsegments 3 befestigt, dass die Generatorkippvorrichtung 4 sich an einer Unterseite, einer 6-Uhr-Position, des Generatorsegments 3 befindet, wenn dieser mit dem Kran angehoben oder abgelassen wird. Zum Heben und Kippen des Generatorsegments 3 ist die Generatorkippvorrichtung 4 mit der Außenumfangsfläche und den Stirnflächen des Generatorsegments 3 formschlüssig verbunden. Die Generatorkippvorrichtung 4 wird mit dem Generatorsegment 3 derart verbunden, dass die Generatorhebevorrichtung 5 nach dem Kippen des Generatorsegments 3 einfach und schnell gelöst werden kann. Hierzu ist eine entsprechende Fixiervorrichtung 92 mit einer ersten und zweiten Fixiereinheit vorgesehen, die in Axialrichtung des Generatorsegments 3 beabstandet zueinander angeordnet sind. Der Abstand zwischen den beiden Fixiereinheiten hängt hierbei von der Breite des zu hebenden und zu kippenden Generatorsegments 3 ab.

Die Generatorkippvorrichtung 4 ist in Bezug auf die Axialrichtung des Generatorsegments 3 längenveränderbar ausgebildet. Hierdurch lässt sich die Generatorkippvorrichtung 4 an die Breite des zu hebenden Generatorsegments 3 anpassen. Hierzu weist die Generatorkippvorrichtung 4 eine in Axialrichtung zweigeteilte Rahmenstruktur auf, die in Abhängigkeit von der Größe und Anzahl von Distanzscheiben 90 unterschiedlich weit zueinander beabstandet angeordnet werden können. Die Rahmenstruktur besteht aus einer ersten und zweiten Generatorkippeinheit, zwischen denen in Abhängigkeit der Breite des Generatorsegments 3 Distanzscheiben 90 angeordnet werden. Je mehr Distanzscheiben 90 vorgesehen werden, umso breitere Generatorsegmente 3 lassen sich an der Generatorkippvorrichtung 4 befestigen. Üblicherweise werden die beiden Generatorkippeinheiten und die Distanzscheiben 90 durch Schrauben kraftschlüssig miteinander verbinden.

Zum Heben bzw. Senken sowie zum Kippen des Generatorsegments wird die Generatorkippvorrichtung 4 mit einem Hilfskran verbunden. Zum Anschlagen des Hilfskrans bzw. der Schlingen weist die Generatorkippvorrichtung 4 eine Hebeeinheit 91 auf. Als Hebeeinheit 91 sind zwei Schäkel vorgesehen, welche an der Rahmenstruktur der Generatorkippvorrichtung 4 drehbar gelagert befestigt sind und quer zur Längserstreckung der Generatorkippvorrichtung 4 zueinander beabstandet angeordnet sind.

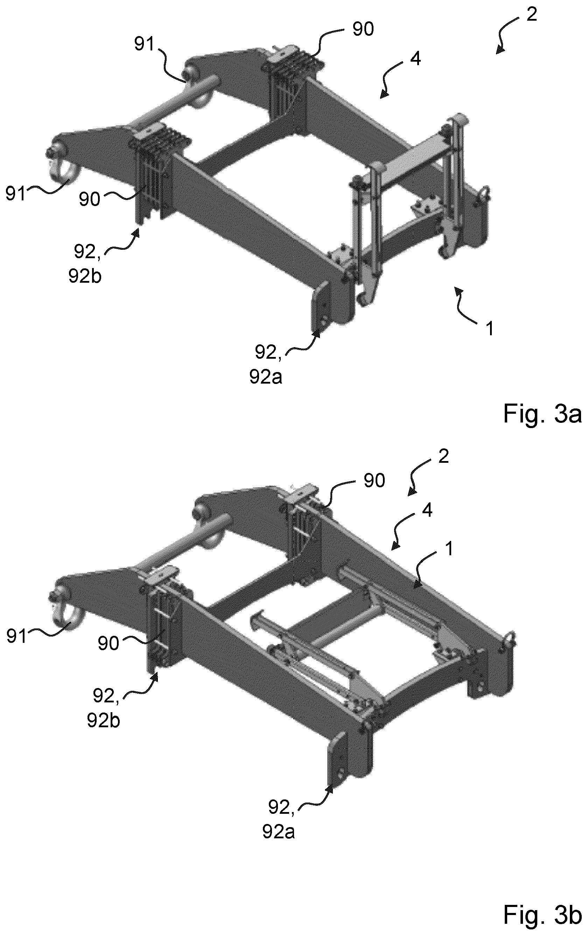

Figuren 3a und 3b zeigen im Detail eine bevorzugte Ausführungsform einer Hebekippvorrichtung 2 mit einer Generatorkippvorrichtung 4 in einer bevorzugten Ausführungsform. Die Generatorkippvorrichtung 4 weist im Wesentlichen die Merkmale der zuvor beschriebenen Generatorkippvorrichtung 4 auf. Aus der Detailansicht wird die zweigeteilte Rahmenstruktur der Generatorkippvorrichtung 4 deutlich. Die Rahmenstruktur weist eine erste und eine zweite Generatorkippeinheit auf. Sowohl die erste als auch die zweite Generatorkippeinheit bilden an einem Ende einen Flansch aus. Die erste und zweite Generatorkippeinheit sind mittels Schrauben miteinander verbunden. In der vorliegenden Ausführungsform sind zwischen den Flanschen mehrere Distanzscheiben 90 angeordnet.

Die Generatorkippvorrichtung 4 weist zur Befestigung der Generatorkippvorrichtung 4 an einem Generatorsegment 3 eine Fixiervorrichtung 92 auf. Die Fixiervorrichtung 92 umfasst eine erste Fixiereinheit 92a und eine von der ersten Fixiereinheit 92a verschiedene zweite Fixiereinheit 92b. Es ist vorgesehen, dass die erste Generatorkippeinheit die erste Fixiereinheit 92a ausbildet und die zweite Generatorkippeinheit die zweite Fixiereinheit 92b ausbildet.

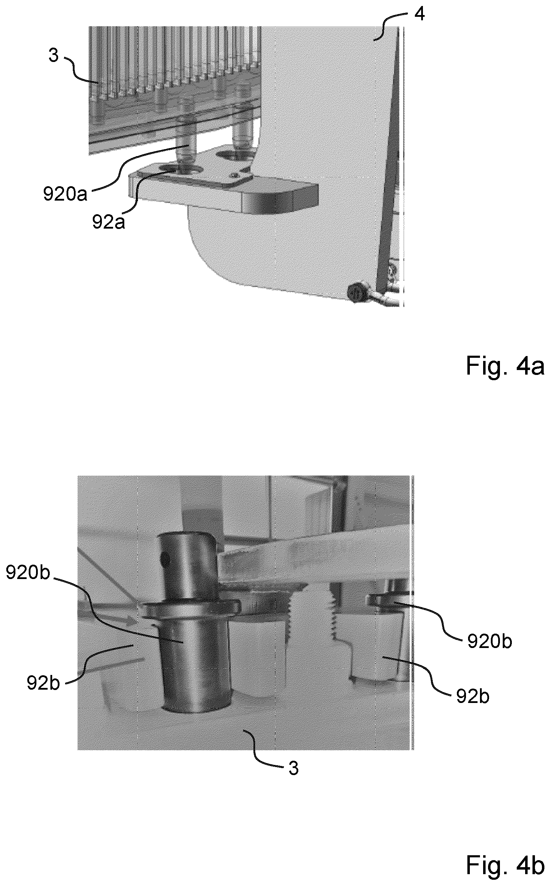

Die erste Fixiereinheit 92a ist flanschartig ausgebildet, um das Generatorsegment 3 während des Hebens und Kippens in Axialrichtung abzustützen. Ferner weist die flanschartig ausgebildete erste Fixiereinheit 92a Durchgangsbohrungen auf, die orthogonal zur Längserstreckung der Generatorkippvorrichtung 4 beabstandet zueinander angeordnet sind. Die Durchgangsbohrungen 92a sind zur Aufnahme von ersten Fixierbolzen 920a ausgebildet, welche das zu hebende und zu kippende Generatorsegment 3 an einer ersten Stirnseite aufweist. Die ersten Fixierbolzen 920a greifen während des Hebens und Kippens formschlüssig in die Durchgangsbohrungen ein. Durch eine Relativbewegung der ersten Fixierbolzen 920a gegenüber den Durchgangsbohrungen lässt sich die Generatorkippvorrichtung 4 von dem Generatorsegment 3 lösen. Dies ist beispielsweise in Figur 4a schematisch dargestellt.

Der Flansch der zweiten Generatorkippeinheit ist ferner als zweite Fixiereinheit 92b ausgebildet. Die zweite Fixiereinheit 92b ist ausgebildet, das Generatorsegment 3 in entgegengesetzter Richtung zu der ersten Fixiereinheit 92a während des Hebens und Kippens in Axialrichtung abzustützen. Die zweite Fixiereinheit 92b weist in der dargestellten bevorzugten Ausführungsform mehrere Fixiernuten auf, die orthogonal zur Längserstreckung der Generatorkippvorrichtung 4 beabstandet zueinander angeordnet sind. Die Fixiernuten 92b sind zur Aufnahme von zweiten Fixierbolzen 920b ausgebildet, welche das zu hebende und zu kippende Generatorsegment 3 an einer zweiten Stirnseite aufweist. Die zweiten Fixierbolzen 920b greifen während des Hebens und Kippens formschlüssig in die Fixiernuten ein. Dies ist beispielsweise in Figur 4b schematisch dargestellt.

An der Generatorkippvorrichtung 4 ist eine Auslösevorrichtung 1 angebracht, um die Generatorkippvorrichtung 4 einfach und schnell von der Unterseite des Generatorsegments 3 zu lösen. Dies ist beispielhaft in den Figuren 2a bis Figur 3b dargestellt. Es ist zu erkennen, dass die Auslösevorrichtung 1 mittels einer Schraubverbindung an der Generatorkippvorrichtung 4 befestigt ist.

Die Figuren 2a bis 3a und die Figuren 8a bis 8c zeigen eine Anordnung der Auslösevorrichtung 1 an der Generatorkippvorrichtung 4, die während des Hebens und Kippens des Generatorsegments 3 vorgesehen ist. Bei dieser Anordnung weist die Auslösevorrichtung 1 eine Haupterstreckungsrichtung im Wesentlichen orthogonal zu der Haupterstreckungsrichtung der Generatorkippvorrichtung 4 auf. Das heißt, dass die Haupterstreckungsrichtung der Auslösevorrichtung 1 im montierten Zustand der Hebekippvorrichtung 2 in Bezug zu der Drehachse des Generatorsegments 3 im Wesentlichen einer Radialrichtung entspricht und die Haupterstreckungsrichtung der Generatorkippvorrichtung 4 im Wesentlichen der Axialrichtung entspricht. Diese Anordnung ist erforderlich, um mittels der Auslösevorrichtung allein durch das Eigengewicht des Generatorsegments, ohne zusätzliches Werkzeug und ohne Personen im Gefahrenbereich, die Generatorkippvorrichtung 4 von dem Generatorsegment gelöst werden kann.

Figur 3b zeigt eine Anordnung der Auslösevorrichtung 1 an der Generatorkippvorrichtung 4, die üblicherweise während des Transports oder der Lagerung der Hebekippvorrichtung 2 vorgesehen ist. Hierbei ist die Auslösevorrichtung 1 derart an der Generatorkippvorrichtung 4 angeordnet, dass die Haupterstreckungsrichtung der Auslösevorrichtung 1 im Wesentlichen identisch ist mit der Haupterstreckungsrichtung der Generatorkippvorrichtung 4. Dies hat den Vorteil, dass die Hebekippvorrichtung platzsparend transportiert und gelagert werden kann.

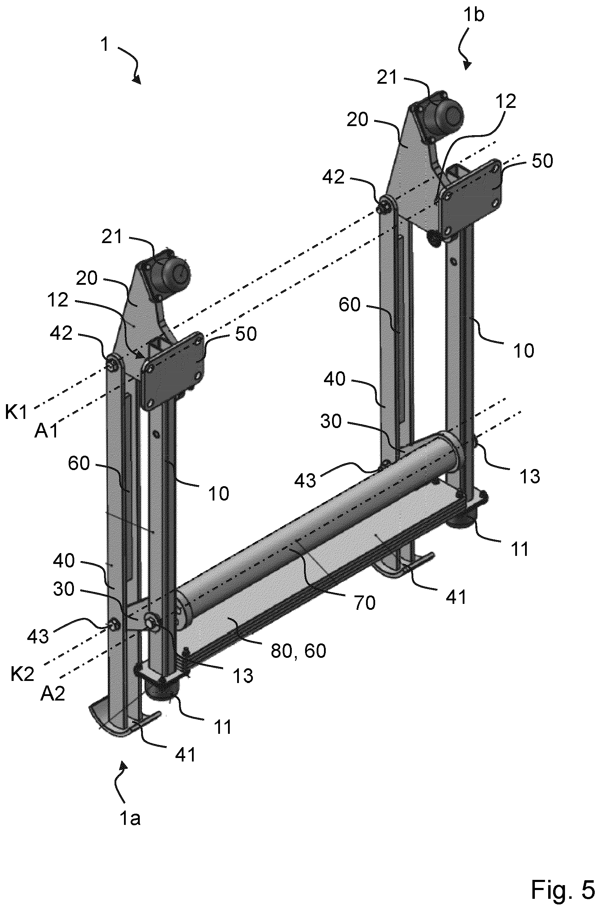

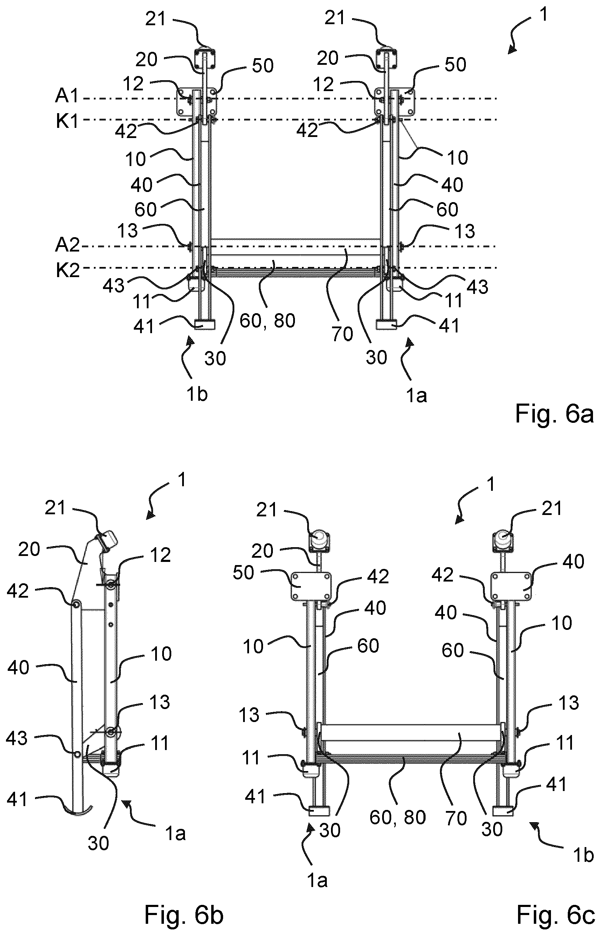

Die Figuren 5 bis 6c sind Detaildarstellungen der Auslösevorrichtung 1 in einer bevorzugten Ausführungsform. Figur 5 zeigt die Auslösevorrichtung 1 in einer dreidimensionalen Ansicht, die Figuren 6a bis 6c in einer Vorderansicht (Figur 6a), einer Seitenansicht (Figur 6b) und einer Rückansicht (Figur 6c).

Die Auslösevorrichtung 1 weist zwei baugleiche Auslöseeinheiten 1a, 1b auf, die beabstandet zueinander angeordnet sind. Die Auslöseeinheiten 1a, 1b weisen jeweils eine Rahmenvorrichtung 10, eine Auslöseschwingvorrichtung 20 und eine Koppelvorrichtung 40 auf.

Die Rahmenvorrichtung ist stabförmig ausgebildet, wobei sie an einem Ende mit einer Befestigungsvorrichtung 50 verbunden ist, über die die Auslösevorrichtung 1 an der Generatorkippvorrichtung 4 der Hebekippvorrichtung befestigbar ist. Die Befestigungsvorrichtung 50 und damit auch die Rahmenvorrichtung sind fest mit der Generatorkippvorrichtung 4 verbunden. Weder die Befestigungsvorrichtung 50 noch die Rahmenvorrichtung 10 sind also relativ bewegbar gegenüber der Generatorkippvorrichtung 4.

Die Auslöseschwingvorrichtung 20 ist schwenkbar an der Rahmenvorrichtung 10 um eine Schwenkachse A1 gelagert. Die Auslöseschwingvorrichtung 20 ist als mechanischer Hebel ausgebildet, welche durch eine Schwenkbewegung die Generatorkippvorrichtung 4 von dem Generatorsegment 3 lösen kann. Durch die Schwenkbewegung drückt die Auslöseschwingvorrichtung 20 die Auslösevorrichtung 1 samt der Generatorkippvorrichtung 4 von dem Generatorsegment 3 in der Axialrichtung ab, so dass sich die ersten Fixierbolzen 920a aus den Durchgangsbohrungen der ersten Fixiereinheit 92a lösen. Figur 4a zeigt schematisch eine Anordnung einer Generatorkippvorrichtung 4 welche von dem Generatorsegment 3 in Axialrichtung gelöst wurde.

Die Schwenkbewegung der Auslöseschwingvorrichtung 20 wird durch die Koppelvorrichtung 40 ausgelöst. Die Koppelvorrichtung 40 ist wie auch die Auslöseschwingvorrichtung 20 gegenüber der Rahmenvorrichtung 10 relativ bewegbar angeordnet. Ferner ist vorgesehen, dass die Koppelvorrichtung um eine erste Koppelschwenkachse K1 schwenkbar gegenüber der Auslöseschwingvorrichtung 20 angeordnet ist. Dies hat zur Folge, dass die Auslöseschwingvorrichtung 20 in Abhängigkeit der Koppelvorrichtung 40 gegenüber der Rahmenvorrichtung 10 bewegt werden kann. In dieser bevorzugten Ausführung ist vorgesehen, dass die Koppelvorrichtung 40 die Auslöseschwingvorrichtung 20 zwischen einer Auslöselage und einer von der Auslöselage verschiedenen Ausgangslage hin und her bewegt. In der Auslöselage weist die Auslöseschwingvorrichtung 20 eine Lage auf, in der eine Generatorkippvorrichtung 4 der Hebekippvorrichtung 2 von dem Generatorsegment 3 bewirkt wird. Die Auslöseschwingvorrichtung wirkt dabei als eine Art mechanischer Hebel, der die Generatorkippvorrichtung samt der Auslösevorrichtung von dem Generatorsegment löst. Um Beschädigungen an der Außenseite des Generatorsegments zu vermeiden, weist die Auslöseschwingvorrichtung ein Gummielement als Auslöseelement 21 auf, das in der Auslöselage mit dem Generatorsegment 3 in Kontakt tritt.

Für eine verbesserte Führung der Koppelvorrichtung 40 und somit der Auslöseschwingvorrichtung 20 ist eine Führungsschwingvorrichtung 30 vorgesehen. Die Führungsschwingvorrichtung 30 koppelt die Koppelvorrichtung ebenfalls schwenkbar an die Rahmenvorrichtung 10. Die Führungsschwingvorrichtung 30 ist beabstandet zu der Auslöseschwenkachse A1 schwenkbar um eine Führungsschwenkachse A2 an der Rahmenvorrichtung angeordnet. Ferner ist die Führungsschwingvorrichtung 30 beabstandet zu der ersten Koppelschwenkachse K1 schwenkbar um eine zweite Koppelschwenkachse K2 an der Koppelvorrichtung 30 schwenkbar angeordnet. Somit verbindet die Koppelvorrichtung die Auslöseschwingvorrichtung 20 und die Führungsschwingvorrichtung 30 bewegbar zueinander.

Für eine stabilere Ausführung der Auslösevorrichtung 1 verbindet eine Führungsschwingenverbindungseinheit 70 die beiden Führungsschwingvorrichtungen 30 der ersten und zweiten Auslöseeinheiten 1a, 1b und eine Rahmenverbindungseinheit 80 die beiden Rahmenvorrichtungen 10 der beiden Auslöseeinheiten 1a, 1b. Hierbei ist die Führungsschwingenverbindungseinheit 70 beabstandet zu der Befestigungsvorrichtung koaxial zu der Führungsschwenkachse A2 angeordnet. Die Rahmenverbindungseinheit 80 ist beabstandet zu der Auslöseschwingvorrichtung koaxial zu der zweiten Koppelschwenkachse K2 angeordnet.

Die beiden Auslöseeinheiten sind derart zueinander beabstandet angeordnet, dass die entsprechenden Schwenkachsen A1, A2, K1, K2 der jeweiligen Auslöseeinheiten 1a, 1b koaxial zueinander angeordnet sind.

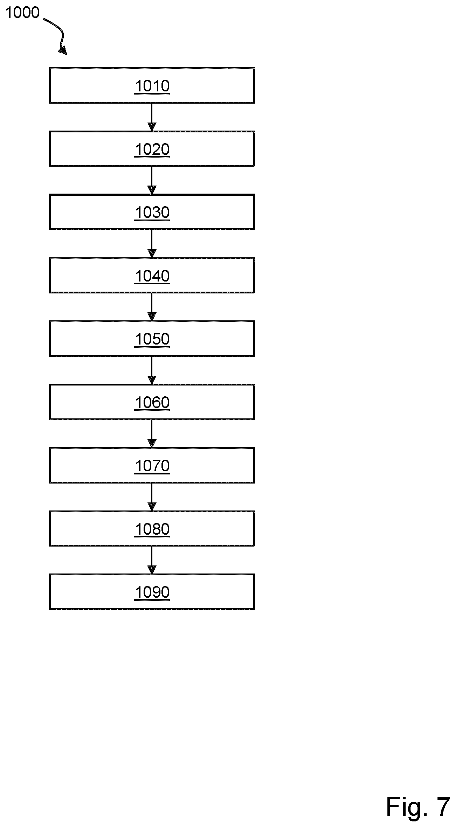

Soll nun ein Generatorsegment 3 mit der zuvor beschriebenen Hebekippvorrichtung 2 angehoben und gekippt werden, umfasst das Verfahren 1000 mehrere Schritte, die das in Figur 7 gezeigte Blockdiagramm für eine bevorzugte Ausführungsform des Verfahrens 1000 schematisch darstellt.

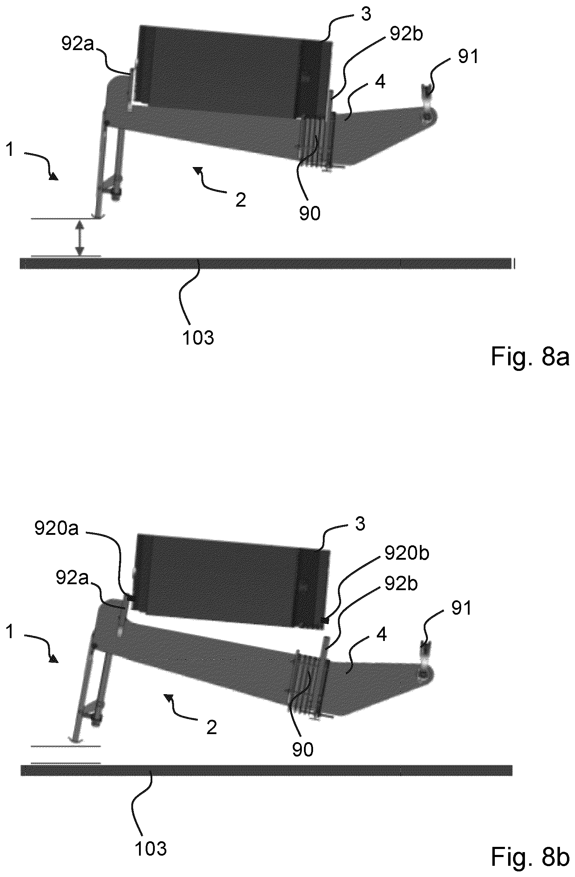

Zunächst wird das Generatorsegment 3 in einer Transportposition bereitgestellt 1010. Figur 2a zeigt beispielhaft eine Ausrichtung des Generatorsegments 3 in der Transportposition. An dem in der Transportposition bereitgestellten Generatorsegment 3 wird dann die zuvor beschriebene Hebekippvorrichtung 2 lösbar befestigt 1020. Hierzu wird, wie zuvor beschrieben, einerseits die Generatorkippvorrichtung 4 an der Unterseite des Generatorsegments befestigt und die Generatorhebevorrichtung 5 an der Oberseite des Generatorsegments befestigt. An der Generatorhebevorrichtung 5 wird dann der Hauptkran angeschlagen, welcher die Hauptlast trägt. An der Generatorkippvorrichtung 4 wird der Hilfskran angeschlagen, welcher im Wesentlichen während des Kippens unterstützend wirkt. Das Generatorsegment 3 wird an der Hebekippvorrichtung 2 mit Hilfe des Hauptkrans und des Hilfskrans angehoben 1030. Nun wird das angehobene Generatorsegment 3 in eine erste Zwischenposition gedreht 1040, die von der Transportposition verschieden ist. Figur 8a zeigt das Generatorsegment 3 in der ersten Zwischenposition. Hierzu wird die Oberseite des Generatorsegments mittels des Hauptkrans nach oben gezogen und ggf. die Unterseite mit dem Hilfskran leicht abgelassen. Während die Drehachse des Generatorsegments 3 in der Transportposition im Wesentlichen vertikal ausgerichtet war, erstreckt sich die Drehachse nach der Drehung vornehmlich im Wesentlichen in einer horizontalen Ebene.

Ausgehend von der ersten Zwischenposition wird das Generatorsegment 3 in eine von der ersten Zwischenposition verschiedene zweite Zwischenposition bewegt 1050, in der sich die zweite Fixiereinheit 92b von dem Generatorsegment 3 löst. Dies kann durch einen Hilfskran oder aber auch durch eine entsprechende Hubbewegung des Hauptkrans erfolgen. Figur 8b zeigt das Generatorsegment in der zweiten Zwischenposition. In dieser zweiten Zwischenposition ist die Generatorkippvorrichtung 4 einseitig von dem Generatorsegment 3 auf der zweiten Stirnseite gelöst. In der zweiten Zwischenposition steht die Koppelvorrichtung 40 allerdings noch nicht im Kontakt mit dem Boden.

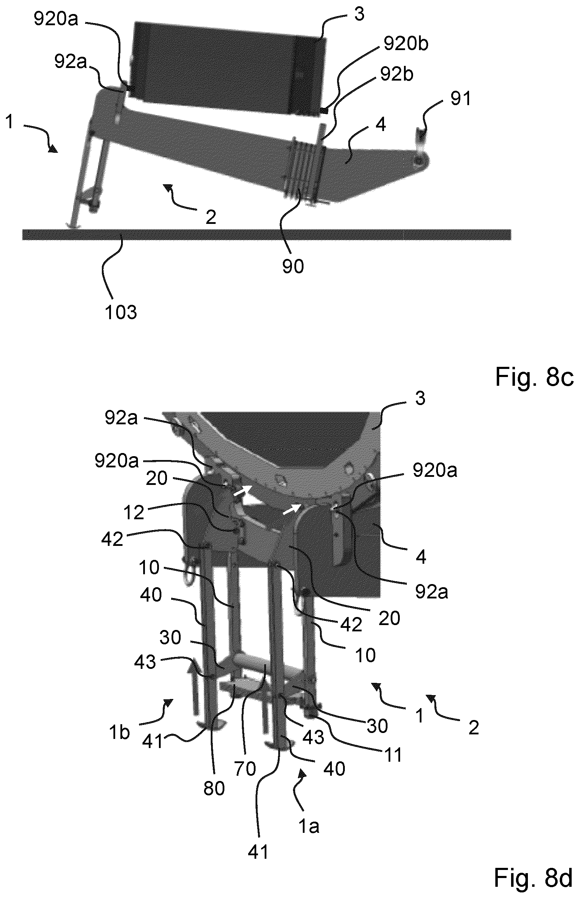

Ausgehend von der zweiten Zwischenposition wird das Generatorsegment 3 gemeinsam mit der Generatorkippvorrichtung dann in eine von der zweiten Zwischenposition verschiedene Auslöseposition bewegt 1060, d.h. abgelassen. Dies ist schematisch in den Figuren 8c und 8d in unterschiedlichen Ansichten schematisch dargestellt. In der Auslöseposition löst sich die erste Fixiereinheit 92a von dem ersten Fixierbolzen 920a und somit die Generatorkippvorrichtung 4 von dem Generatorsegment 3. Figur 4a zeigt die Generatorkippvorrichtung gelöst von dem Generatorsegment 3.

Die Generatorkippvorrichtung 4 wird mittels der Auslösevorrichtung 1 von dem Generatorsegment gelöst. Dies erfolgt durch die Koppelvorrichtung 40, die eine Relativbewegung ausführt, sobald die Koppelvorrichtung 40 mit einem Fußelement 41 beim Ablassen des Generatorsegments 3 den Boden 103 berührt. Sobald die Koppelvorrichtung 40 den Boden 103 berührt, steht die Koppelvorrichtung 40 in vertikaler Richtung im Wesentlichen fest, d.h. das lediglich das Generatorsegment 3 mit der daran angeordneten Generatorkippvorrichtung 4, Rahmenvorrichtung 10 und Auslöseschwingvorrichtung 20 in vertikaler Richtung weiter abgesenkt wird. Dabei wird die Absenkbewegung der Auslöseschwingvorrichtung 20 bedingt durch die feststehende Koppelvorrichtung 40 von einer Lageänderung überlagert, welche zum Lösen der Generatorkippvorrichtung 4 von dem Generatorsegment 3 führt. Insbesondere verändert sich die Lage der Auslöseschwingvorrichtung 20 ab dem Bodenkontakt der Koppelvorrichtung 40 ausgehend von einer Ausgangslage zu einer Auslöselage, die von der Ausgangslage verschieden ist. In der Auslöselage steht die Auslöseschwingvorrichtung 20 mit dem Generatorsegment in Kontakt, welcher das Lösen der Generatorkippvorrichtung 4 von dem Generatorsegment 3 bewirkt.

Im Anschluss daran kann die vom von dem Generatorsegment 3 gelöste Generatorkippvorrichtung 4 entfernt werden 1070.

Nun wird das Generatorsegment mittels des Hauptkrans an der Generatorhebevorrichtung 5 von der Auslöseposition in die Montageposition angehoben 1080, um das Generatorsegment in der Betriebsposition an der Gondel der Windenergieanlage zu montieren 1090.

### Bezugszeichenliste

- 1: Auslösevorrichtung
- 1a, 1b: Auslöseeinheit
- 2: Hebekippvorrichtung
- 3: Generatorsegment
- 4: Generatorkippvorrichtung
- 5: Generatorhebevorrichtung
- 10: Rahmenvorrichtung
- 11: Rahmenfuß
- 12: erstes Rahmengelenk
- 13: zweites Rahmengelenk
- 20: Auslöseschwingvorrichtung
- 21: Auslöseelement
- 30: Führungsschwingvorrichtung
- 40: Koppelvorrichtung
- 41: Koppelfuß
- 42: erstes Koppelgelenk
- 43: zweites Koppelgelenk
- 50: Befestigungsvorrichtung
- 60: Knicksteife
- 70: Führungsschwingenverbindungseinheit
- 80: Rahmenverbindungseinheit
- 90: Distanzscheibe
- 91: Hebeeinheit
- 92: Fixiervorrichtung
- 92a: erste Fixiereinheit
- 92b: zweite Fixiereinheit
- 920a: erste Fixierbolzen
- 920b: zweite Fixierbolzen
- 100: Windenergieanlage
- A1: Auslöseschwenkachse
- A2: Führungsschwenkachse
- K1: erste Koppelschwenkachse
- K2: zweite Koppelschwenkachse

## Patentansprüche

1. Auslösevorrichtung (1) für eine Hebekippvorrichtung (2) zum Lösen der Hebekippvorrichtung (2) von einem Generatorsegment (3) eines Generators, insbesondere von einem Generatorsegment (3) eines Generators einer Windenergieanlage (100), welche mindestens eine Auslöseeinheit (1a, 1b) umfasst, die zum Lösen der Hebekippvorrichtung (2) von dem Generatorsegment (3) ausgebildet ist, wobei die mindestens eine Auslöseeinheit (1a, 1b) aufweist:
- eine Rahmenvorrichtung (10), die zur Verbindung der Auslösevorrichtung (1) an einer Generatorkippvorrichtung (4) der Hebekippvorrichtung (2) ausgebildet ist,
- eine Auslöseschwingvorrichtung (20), die an der Rahmenvorrichtung (10) um eine Auslöseschwenkachse (A1) schwenkbar oder entlang einer Linearführung translatorisch verschiebbar angeordnet ist,
- eine Koppelvorrichtung (40), die an der Auslöseschwingvorrichtung (20) um eine erste Koppelschwenkachse (K1) schwenkbar oder entlang einer Linearführung translatorisch verschiebbar angeordnet ist und gegenüber der Rahmenvorrichtung (10) bewegbar angeordnet ist, wobei
- die Auslöseschwingvorrichtung (20) in Abhängigkeit einer Lage der Koppelvorrichtung (40) in Bezug zu der Rahmenvorrichtung (10) zwischen einer Auslöselage und einer von der Auslöselage verschiedenen Ausgangslage hin und her bewegbar ist, wobei die Auslöseschwingvorrichtung (20) ausgebildet ist, in der Auslöselage ein Lösen der Hebekippvorrichtung (2) von dem Generatorsegment (3) zu bewirken,
- **dadurch gekennzeichnet dass** die mindestens eine Auslöseeinheit (1a, 1b) eine Führungsschwingvorrichtung (30) aufweist, die beabstandet zu der Auslöseschwingvorrichtung (20) an der Rahmenvorrichtung (10) schwenkbar um eine Führungsschwenkachse (A2) angeordnet ist.

2. Auslösevorrichtung (1) nach dem vorhergehenden Anspruch 1, wobei die Koppelvorrichtung (40) die Auslöseschwingvorrichtung (20) und die Führungsschwingvorrichtung (30) miteinander koppelt, wobei die Koppelvorrichtung (40) an der Führungsschwingvorrichtung (30) bewegbar angeordnet ist.

3. Auslösevorrichtung (1) nach einem der vorhergehenden Ansprüche 1 bis 2, wobei die Koppelvorrichtung (40) an der Führungsschwingvorrichtung (30) um eine zweite Koppelschwenkachse (K2) schwenkbar angeordnet ist.

4. Auslösevorrichtung (1) nach einem der vorhergehenden Ansprüche 1 bis 3, wobei
die mindestens eine Auslöseeinheit (1a, 1b) als Parallelkurbelgetriebe oder Doppelschwinge ausgebildet ist, und/oder
die mindestens eine Auslöseeinheit (1a, 1b) eine Befestigungsvorrichtung (50) aufweist, die an der Rahmenvorrichtung (10) angeordnet ist und zur Befestigung der Auslösevorrichtung (1) an der Generatorkippvorrichtung (4) der Hebekippvorrichtung (2) ausgebildet ist, und/oder
die mindestens eine Auslöseeinheit (1a, 1b) als Knicksteife (60) ausgebildet ist, wobei vorzugsweise die Rahmenvorrichtung (10) und/oder die Koppelvorrichtung (40) als Knicksteife (60) ausgebildet sind.

5. Auslösevorrichtung (1) nach einem der vorhergehenden Ansprüche 1 bis 4, aufweisend zwei Auslöseeinheiten (1a, 1b), die beabstandet zueinander angeordnet sind, so dass die entsprechenden Schwenkachsen (A1, A2, K1, K2) der jeweiligen Auslöseeinheiten (1a, 1b) koaxial zueinander angeordnet sind.

6. Auslösevorrichtung (1) nach einem der vorhergehenden Ansprüche 1 bis 5, aufweisend
- eine Führungsschwingenverbindungseinheit (70), welche mit den beiden Führungsschwingvorrichtungen (30) und/oder den beiden Auslöseschwingvorrichtungen (20) der beiden Auslöseeinheiten (1a, 1b) verbunden, insbesondere drehmomentfest verbunden, ist, und/oder
- eine Rahmenverbindungseinheit (80), welche mit den beiden Rahmenvorrichtungen (10) der beiden Auslöseeinheiten (1a, 1b) verbunden, insbesondere fest verbunden, ist.

7. Hebekippvorrichtung (2) zum Heben und Kippen eines Generatorsegments (3) eines Generators, insbesondere eines Generatorsegments (3) eines Generators einer Windenergieanlage (100), die Hebekippvorrichtung (2) aufweisend:
- eine Generatorkippvorrichtung (4), die zum Heben und Kippen des Generatorsegments (3) ausgebildet ist, wobei die Generatorkippvorrichtung (4) zum Heben und/oder Kippen des Generatorsegments (3) an einer Unterseite des Generatorsegments (3) an einer Außenumfangsfläche und/oder einer ersten Stirnseite und/oder einer zweiten Stirnseite mit dem Generatorsegment (3) lösbar verbindbar ist, und
- eine Auslösevorrichtung (1) nach einem der vorhergehenden Ansprüche 1 bis 6, die mit der Generatorkippvorrichtung (4) verbunden ist.

8. Hebekippvorrichtung (2) nach dem vorhergehenden Anspruch 7, wobei
- die Generatorkippvorrichtung (4) in einer Axialrichtung längenveränderbar ausgebildet ist, um die Erstreckung der Generatorkippvorrichtung (4) in Axialrichtung an die Erstreckung des Generatorsegments (3) anzupassen,
- wobei insbesondere bevorzugt die Generatorkippvorrichtung (4) eine oder mehrere Distanzscheiben (90) aufweist, um die Erstreckung der Generatorhebevorrichtung (5) in Axialrichtung an die Erstreckung des Generatorsegments (3) anzupassen.

9. Hebekippvorrichtung (2) nach einem der vorhergehenden Ansprüche 7 oder 8, aufweisend
- eine Generatorhebevorrichtung (5), die zum Heben und Kippen des Generatorsegments (3) ausgebildet ist, wobei die Generatorhebevorrichtung (5) zum Heben und/oder Kippen des Generatorsegments (3) an einer Oberseite des Generatorsegments (3) an einer Außenumfangsfläche und/oder einer ersten Stirnseite und/oder einer zweiten Stirnseite mit dem Generatorsegment (3) lösbar verbindbar ist,
- wobei vorzugsweise die Generatorhebevorrichtung (5) in einer Axialrichtung längenveränderbar ausgebildet ist, um die Erstreckung der Generatorhebevorrichtung (5) in Axialrichtung an die Erstreckung des Generatorsegments (3) anzupassen,
- wobei insbesondere bevorzugt die Generatorhebevorrichtung (5) eine oder mehrere Distanzscheiben aufweist, um die Erstreckung der Generatorhebevorrichtung (5) in Axialrichtung an die Erstreckung des Generatorsegments (3) anzupassen.

10. Hebekippvorrichtung (2) nach einem der vorhergehenden Ansprüche 7 bis 9, wobei die Generatorkippvorrichtung (4) und/oder die Generatorhebevorrichtung (5)
- eine Hebeeinheit (91) aufweist, die zur Verbindung mit einem Kran oder dergleichen ausgebildet ist; und/oder
- eine Fixiervorrichtung (92) aufweist, die zur lösbaren Fixierung der Hebekippvorrichtung (2) an dem Generatorsegment (3) ausgebildet ist.

11. Hebekippvorrichtung (2) nach dem vorhergehenden Anspruch 10, wobei
- die Fixiervorrichtung (92) eine erste Fixiereinheit und eine zu der ersten Fixiereinheit in der Axialrichtung beabstandet angeordnete zweite Fixiereinheit aufweist, und/oder
- wobei vorzugsweise der Abstand zwischen der ersten und zweiten Fixiereinheit in Abhängigkeit der Erstreckung des zu hebenden und/oder zu kippenden Generatorsegments (3) in Axialrichtung veränderbar ist, und/oder
- wobei vorzugsweise die erste Fixiereinheit (92a) von der zweiten Fixiereinheit (92b) verschieden ist, und/oder
- wobei besonders bevorzugt, die erste Fixiereinheit (92a) eine oder mehrere bohrungsartige Öffnungen aufweist, die ausgebildet sind, die an dem Generatorsegment (3) angeordneten ersten Fixierbolzen (920a) aufzunehmen, insbesondere durch Einstecken aufzunehmen, und/oder die zweite Fixiereinheit (92b) eine oder mehrere Fixernuten aufweist, die ausgebildet sind an dem Generatorsegment (3) angeordnete zweite Fixierbolzen (920b) aufzunehmen, insbesondere einzulegen, und/oder
- wobei besonders bevorzugt, die erste Fixiereinheit (92a) eine oder mehrere Bolzen aufweist, die ausgebildet sind in an dem Generatorsegment (3) vorgesehene bohrungsartige Öffnungen eingeführt zu werden, insbesondere eingesteckt zu werden, und/oder die zweite Fixiereinheit (92b) eine oder mehrere Bolzen aufweist, die ausgebildet sind in an dem Generatorsegment (3) angeordnete Fixiernuten aufgenommen zu werden, insbesondere eingelegt zu werden.

12. Verfahren zum Heben und Kippen eines Generatorsegments (3), insbesondere eines Generatorsegments (3) einer Windenergieanlage (100), **gekennzeichnet durch** die Schritte:
- Bereitstellen des Generatorsegments (3) in einer Transportposition;
- Befestigen einer Hebekippvorrichtung (2) nach einem der vorhergehenden Ansprüche 7 bis 11 an dem in der Transportposition bereitgestellten Generatorsegment (3);
- Anheben des Generatorsegments (3) an der Hebekippvorrichtung (2);
- Drehen des angehobenen Generatorsegments in eine erste Zwischenposition, die von der Transportposition verschieden ist;
- Bewegen Generatorsegments (3) in eine zweite Zwischenposition, in der sich die zweite Fixiereinheit (92b) von dem Generatorsegment (3) löst;
- Absetzen des Generatorsegments ausgehend von der Zwischenposition in eine Auslöseposition des Generatorsegments, die von der Transportposition und der Zwischenposition verschieden ist, so dass die Auslöseschwingvorrichtung (20) der Auslösevorrichtung (1) von der Ausgangslage in die Auslöselage bewegt wird, so dass die Auslöseschwingvorrichtung (20) die lösbar mit dem Generatorsegment (3) verbundene Generatorkippvorrichtung (4) von dem Generatorsegment (3) löst.

13. Verfahren nach dem vorhergehenden Anspruch 12, aufweisend die Schritte:
- Entfernen der von dem Generatorsegment (3) gelösten Generatorkippvorrichtung (4) der Hebekippvorrichtung (2); und/oder
- Anheben des Generatorsegments (3) mittels der Generatorhebevorrichtung (5) von der Auslöseposition in eine Betriebsposition, die von der Auslöseposition verschieden ist; und/oder
- Montage des Generatorsegments (3) an einer Gondel der Windenergieanlage (100) in der Betriebsposition.

14. Verfahren zur Montage einer Hebekippvorrichtung nach einem der vorhergehenden Ansprüche 7 bis 11 an einem demontierten Generatorsegment (3), insbesondere an einem demontierten Generatorsegment (3) einer Windenergieanlage (100), **gekennzeichnet durch** die Schritte:
- Bereitstellen der Hebekippvorrichtung nach einem der vorhergehenden Ansprüche 9 bis 13 auf einem Boden, und
- Ablassen des demontierten Generatorsegments (3) mit einem Hauptkran in eine Montageposition, und
- Einführen von ersten Fixierbolzen (920a), die an dem Generatorsegment (3) angeordnet sind, in die erste Fixiereinheit (92a), die eine oder mehrere bohrungsartige Öffnungen aufweist, und
- Anheben des Generatorsegments (3) an der Hebekippvorrichtung an einem Hilfskran, bis die zweite Fixiereinheit (92b), die eine oder mehrere Fixernuten aufweist, die an dem Generatorsegment (3) angeordneten zweiten Fixierbolzen (920b) aufnimmt, und
- Schwenken des Generatorsegments in die Transportposition, und
- Ablegen des in die Transportposition geschwenkten Generatorsegments (3).

## Claims

1. Release device (1) for a lifting and tilting device (2) for releasing the lifting and tilting device (2) from a generator segment (3) of a generator, in particular from a generator segment (3) of a generator of a wind turbine (100), which comprises at least one release unit (1a, 1b),
which is designed for releasing the lifting and tilting device (2) from the generator segment (3), wherein the at least one release unit (1a, 1b) is provided:
- a frame device (10) which is designed to connect the release device (1) to a generator tilting device (4) of the lifting and tilting device (2),
- a release swing device (20) which is arranged on the frame device (10) so as to be pivotable about a triggering pivot axis (A1) or displaceable in translation along a linear guide,
- a coupling device (40) which is arranged on the release swing device (20) so as to be pivotable about a first coupling pivot axis (K1) or displaceable in translation along a linear guide and is arranged so as to be movable relative to the frame device (10), wherein
- the release swing device (20) can be moved back and forth between a release position and an initial position different from the release position as a function of a position of the coupling device (40) in relation to the frame device (10), wherein the release swing device (20) is designed to cause a release of the lifting and tilting device (2) from the generator segment (3) in the release position,
**characterised in that**
- the at least one release unit (1a, 1b) has a guide swing device (30) which is arranged on the frame device (10) at a distance from the release swing device (20) so as to be pivotable about a guide pivot axis (A2).

2. Release device (1) according to the preceding claim 1, wherein the coupling device (40) couples the release swing device (20) and the guide swing device (30) to one another, wherein the coupling device (40) is movably arranged on the guide swing device (30).

3. Release device (1) according to one of the preceding claims 1 to 2, wherein the coupling device (40) is arranged on the guide swing device (30) so as to be pivotable about a second coupling pivot axis (K2).

4. Release device (1) according to one of the preceding claims 1 to 3, wherein
the at least one release unit (1a, 1b) is designed as a parallel crank gear or double rocker, and/or
the at least one release unit (1a, 1b) has a fastening device (50) which is arranged on the frame device (10) and is designed for fastening the release device (1) to the generator tilting device (4) of the lifting and tilting device (2), and/or
the at least one release unit (1a, 1b) is designed as an articulated stiffener (60), wherein preferably the frame device (10) and/or the coupling device (40) are designed as an articulated stiffener (60).

5. Release device (1) according to one of the preceding claims 1 to 4, comprising two release units (1a, 1b) which are arranged at a distance from one another, so that the corresponding swivelling axes (A1, A2, K1, K2) of the respective release units (1a, 1b) are arranged coaxially to one another.

6. Release device (1) according to one of the preceding claims 1 to 5, comprising
- a guide swing connecting unit (70), which is connected, in particular connected in a torque-proof manner, to the two guide rocker devices (30) and/or the two release swing devices (20) of the two release units (1a, 1b), and/or
- a frame connecting unit (80), which is connected, in particular firmly connected, to the two frame devices (10) of the two release units (1a, 1b).

7. Lifting and tilting device (2) for lifting and tilting a generator segment (3) of a generator, in particular a generator segment (3) of a generator of a wind turbine (100), the lifting and tilting device (2) comprising:
- a generator tilting device (4) which is designed for lifting and tilting the generator segment (3), wherein the generator tilting device (4) for lifting and/or tilting the generator segment (3) can be detachably connected to the generator segment (3) on an underside of the generator segment (3) at an outer circumferential surface and/or a first end face and/or a second end face, and
- a release device (1) according to one of the preceding claims 1 to 6, which is connected to the generator tilting device (4).

8. Lifting and tilting device (2) according to the preceding claim 7, wherein
- the generator tilting device (4) is designed to be variable in length in an axial direction in order to adapt the extension of the generator tilting device (4) in the axial direction to the extension of the generator segment (3),
- wherein in particular the generator tilting device (4) preferably has one or more spacer discs (90) in order to adapt the extension of the generator lifting device (5) in the axial direction to the extension of the generator segment (3).

9. Lifting and tilting device (2) according to one of the preceding claims 7 or 8, comprising
- a generator lifting device (5) which is designed for lifting and tilting the generator segment (3), wherein the generator lifting device (5) for lifting and/or tilting the generator segment (3) can be detachably connected to the generator segment (3) at an outer circumferential surface and/or a first end face and/or a second end face on an upper side of the generator segment (3),
- wherein the generator lifting device (5) is preferably designed to be variable in length in an axial direction in order to adapt the extension of the generator lifting device (5) in the axial direction to the extension of the generator segment (3),
- wherein in particular the generator lifting device (5) preferably has one or more spacer discs in order to adapt the extension of the generator lifting device (5) in the axial direction to the extension of the generator segment (3).

10. Lifting and tilting device (2) according to one of the preceding claims 7 to 9, wherein the generator tilting device (4) and/or the generator lifting device (5)
- has a lifting unit (91) which is designed for connection to a crane or the like; and/or
- has a fixing device (92) which is designed for releasably fixing the lifting and tilting device (2) to the generator segment (3).

11. Lifting and tilting device (2) according to the preceding claim 10, wherein
- the fixing device (92) has a first fixing unit and a second fixing unit arranged at a distance from the first fixing unit in the axial direction, and/or
- wherein preferably the distance between the first and second fixing unit can be varied in the axial direction as a function of the extension of the generator segment (3) to be lifted and/or tilted, and/or
- wherein preferably the first fixing unit (92a) is different from the second fixing unit (92b), and/or
- wherein, particularly preferably, the first fixing unit (92a) has one or more bore-like openings which are designed to receive the first fixing bolts (920a) arranged on the generator segment (3), in particular to receive them by insertion, and/or the second fixing unit (92b) has one or more fixing grooves which are designed to receive, in particular to insert, the second fixing bolts (920b) arranged on the generator segment (3),
- wherein, particularly preferably, the first fixing unit (92a) has one or more bolts which are designed to be inserted into bore-like openings provided on the generator segment (3), in particular to be inserted, and/or the second fixing unit (92b) has one or more bolts which are designed to be received in fixing grooves arranged on the generator segment (3), in particular to be inserted.

12. Method for lifting and tilting a generator segment (3), in particular a generator segment (3) of a wind turbine (100), **characterised by** the following steps:
- Providing the generator segment (3) in a transport position;
- Attaching a lifting and tilting device (2) according to one of the preceding claims 7 to 11 to the generator segment (3) provided in the transport position;
- Lift the generator segment (3) on the lifting and tilting device (2);
- Rotating the raised generator segment to a first intermediate position, which is different from the transport position;
- Moving the generator segment (3) to a second intermediate position in which the second fixing unit (92b) detaches from the generator segment (3);
- Lowering of the generator segment, starting from the intermediate position, into a release position of the generator segment, which is different from the transport position and the intermediate position, so that the release swing device (20) of the release device (1) is moved from the initial position into the release position, so that the release swing device (20) releases the generator tilting device (4), which is detachably connected to the generator segment (3), from the generator segment (3).

13. A method according to the preceding claim 12, comprising the steps of:
- Removal of the generator tilting device (4) of the lifting and tilting device (2) detached from the generator segment (3); and/or
- Lifting of the generator segment (3) by means of the generator lifting device (5) from the release position to an operating position which is different from the release position; and/or
- Mounting the generator segment (3) on a nacelle of the wind turbine (100) in the operating position.

14. Method for mounting a lifting and tilting device according to one of the preceding claims 7 to 11 on a dismantled generator segment (3), in particular on a dismantled generator segment (3) of a wind turbine (100), **characterised by** the steps:
- Providing the lifting and tilting device according to any one of the preceding claims 9 to 13 on a ground, and
- Lowering the dismantled generator segment (3) into an assembly position using a main crane, and
- insertion of first fixing bolts (920a), which are arranged on the generator segment (3), into the first fixing unit (92a), which has one or more bore-like openings, and
- Lifting the generator segment (3) on the lifting and tilting device on an auxiliary crane until the second fixing unit (92b), which has one or more fixing grooves, picks up the second fixing bolts (920b) arranged on the generator segment (3), and
- Swivelling the generator segment into the transport position, and
- Set down the generator segment (3) swivelled into the transport position.

## Revendications

1. Dispositif de déclenchement (1) pour un dispositif de levage-basculement (2) pour détacher le dispositif de levage-basculement (2) d'un segment de générateur (3) d'un générateur, en particulier d'un segment de générateur (3) d'un générateur d'une éolienne (100), comprenant au moins une unité de déclenchement (1a, 1b),
qui est réalisé pour détacher le dispositif de levage-basculement (2) du segment de générateur (3), dans lequel l'au moins une unité de déclenchement (1a, 1b) présente :
- un dispositif de cadre (10) qui est réalisé pour relier le dispositif de déclenchement (1) à un dispositif de basculement de générateur (4) du dispositif de levage-basculement (2),
- un dispositif oscillant de déclenchement (20) qui est disposé sur le dispositif de cadre (10) de manière à pouvoir pivoter autour d'un axe de pivotement de déclenchement (A1) ou de manière à pouvoir se déplacer en translation le long d'un guidage linéaire,
- un dispositif de couplage (40) qui est disposé sur le dispositif oscillant de déclenchement (20) de manière à pouvoir pivoter autour d'un premier axe de pivotement de couplage (K1) ou de manière à pouvoir se déplacer en translation le long d'un guidage linéaire et est disposé de manière mobile par rapport au dispositif de cadre (10), dans lequel
- le dispositif oscillant de déclenchement (20) peut être animé d'un mouvement de va-et-vient entre une situation de déclenchement et une situation de départ différente de la situation de déclenchement en fonction d'une situation du dispositif de couplage (40) par rapport au dispositif de cadre (10), dans lequel le dispositif oscillant de déclenchement (20) est réalisé pour provoquer, dans la situation de déclenchement, un détachement du dispositif de levage-basculement (2) du segment de générateur (3),
- **caractérisé en ce que** l'au moins une unité de déclenchement (1a, 1b) présente un dispositif oscillant de guidage (30) qui est disposé de manière à pouvoir pivoter autour d'un axe de pivotement de guidage (A2) à distance du dispositif oscillant de déclenchement (20) sur le dispositif de cadre (10).

2. Dispositif de déclenchement (1) selon la revendication 1 précédente, dans lequel le dispositif de couplage (40) couple le dispositif oscillant de déclenchement (20) et le dispositif oscillant de guidage (30) l'un à l'autre, dans lequel le dispositif de couplage (40) est disposé de manière mobile sur le dispositif oscillant de guidage (30).

3. Dispositif de déclenchement (1) selon l'une quelconque des revendications 1 et 2 précédentes, dans lequel le dispositif de couplage (40) est disposé sur le dispositif oscillant de guidage (30) de manière à pouvoir pivoter autour d'un deuxième axe de pivotement de couplage (K2).

4. Dispositif de déclenchement (1) selon l'une quelconque des revendications 1 à 3 précédentes, dans lequel l'au moins une unité de déclenchement (1a, 1b) est réalisée en tant que mécanisme à manivelle parallèle ou double bras oscillant, et/ou
l'au moins au moins une unité de déclenchement (1a, 1b) présente un dispositif de fixation (50) qui est disposé sur le dispositif de cadre (10) et est réalisé pour fixer le dispositif de déclenchement (1) sur le dispositif de basculement de générateur (4) du dispositif de levage-basculement (2), et/ou
l'au moins une unité de déclenchement (1a, 1b) est réalisée en tant que rigide à la flexion (60), dans lequel le dispositif de cadre (10) et/ou le dispositif de couplage (40) sont de préférence réalisés en tant que rigide(s) à la flexion (60).

5. Dispositif de déclenchement (1) selon l'une quelconque des revendications 1 à 4 précédentes, présentant deux unités de déclenchement (1a, 1b) qui sont disposées de manière espacée l'une de l'autre, de sorte que les axes de pivotement (A1, A2, K1, K2) correspondants des unités de déclenchement (1a, 1b) respectives sont disposés coaxialement les uns par rapport aux autres.

6. Dispositif de déclenchement (1) selon l'une quelconque des revendications 1 à 5 précédentes, présentant
- une unité de liaison oscillante de guidage (70), laquelle est reliée, en particulier reliée de manière solidaire en couple de rotation, aux deux dispositifs oscillants de guidage (30) et/ou aux deux dispositifs oscillants de déclenchement (20) des deux unités de déclenchement (1a, 1b), et/ou
- une unité de liaison de cadre (80), laquelle est reliée, en particulier reliée solidement, aux deux dispositifs de cadre (10) des deux unités de déclenchement (1a, 1b).

7. Dispositif de levage-basculement (2) pour lever et basculer un segment de générateur (3) d'un générateur, en particulier un segment de générateur (3) d'un générateur d'une éolienne (100), le dispositif de levage-basculement (2) présentant :
- un dispositif de basculement de générateur (4) qui est réalisé pour lever et basculer le segment de générateur (3), dans lequel le dispositif de basculement de générateur (4) pour lever et/ou basculer le segment de générateur (3) peut être relié de manière détachable au segment de générateur (3) sur une face inférieure du segment de générateur (3) sur une surface périphérique extérieure et/ou une première face frontale et/ou une deuxième face frontale, et
- un dispositif de déclenchement (1) selon l'une quelconque des revendications précédentes 1 à 6, qui est relié au dispositif de basculement de générateur (4).

8. Dispositif de levage-basculement (2) selon la revendication 7 précédente, dans lequel
- le dispositif de basculement de générateur (4) est réalisé de manière réglable en longueur dans une direction axiale pour adapter l'extension du dispositif de basculement de générateur (4) dans la direction axiale à l'extension du segment de générateur (3),
- dans lequel le dispositif de basculement de générateur (4) présente, de manière particulièrement préférée, une ou plusieurs rondelles d'écartement (90) pour adapter l'extension du dispositif de levage de générateur (5) dans la direction axiale à l'extension du segment de générateur (3).

9. Dispositif de levage-basculement (2) selon l'une quelconque des revendications 7 ou 8 précédentes, présentant
- un dispositif de levage de générateur (5), qui est réalisé pour lever et basculer le segment de générateur (3), dans lequel le dispositif de levage de générateur (5) pour lever et/ou basculer le segment de générateur (3) peut être relié de manière détachable au segment de générateur (3) sur une face supérieure du segment de générateur (3) sur une surface périphérique extérieure et/ou une première face frontale et/ou une deuxième face frontale,
- dans lequel de préférence le dispositif de levage de générateur (5) est réalisé de manière réglable en longueur dans une direction axiale pour adapter l'extension du dispositif de levage de générateur (5) dans la direction axiale à l'extension du segment de générateur (3),
- dans lequel, de manière particulièrement préférée, le dispositif de levage de générateur (5) présente une ou plusieurs rondelles d'écartement pour adapter l'extension du dispositif de levage de générateur (5) dans la direction axiale à l'extension du segment de générateur (3).

10. Dispositif de levage-basculement (2) selon l'une quelconque des revendications 7 à 9 précédentes, dans lequel le dispositif de basculement de générateur (4) et/ou le dispositif de levage de générateur (5)
- présente une unité de levage (91) qui est réalisée pour être reliée à une grue ou similaire ; et/ou
- présente un dispositif de fixation (92) qui est réalisé pour fixer de manière détachable le dispositif de levage-basculement (2) sur le segment de générateur (3).

11. Dispositif de levage-basculement (2) selon la revendication 10 précédente, dans lequel
- le dispositif de fixation (92) présente une première unité de fixation et une deuxième unité de fixation disposée de manière espacée de la première unité de fixation dans la direction axiale, et/ou
- dans lequel de préférence la distance entre la première et la deuxième unité de fixation est modifiable dans la direction axiale en fonction de l'extension du segment de générateur (3) à lever et/ou à basculer, et/ou
- dans lequel de préférence la première unité de fixation (92a) est différente de la deuxième unité de fixation (92b), et/ou
- dans lequel, de manière particulièrement préférée, la première unité de fixation (92a) présente une ou plusieurs ouvertures de type trou qui sont réalisées pour recevoir les premiers boulons de fixation (920a) disposés sur le segment de générateur (3), en particulier par insertion, et/ou la deuxième unité de fixation (92b) présente une ou plusieurs rainures de fixation, qui sont réalisées pour recevoir, en particulier pour placer, des deuxièmes boulons de fixation (920b) disposés sur le segment de générateur (3), et/ou
- dans lequel, de manière particulièrement préférée, la première unité de fixation (92a) présente un ou plusieurs boulons qui sont réalisés pour être introduits, en particulier insérés, dans des ouvertures de type trou prévues sur le segment de générateur (3), et/ou la deuxième unité de fixation (92b) présente un ou plusieurs boulons qui sont réalisés pour être reçus, en particulier placés, dans des rainures de fixation disposées sur le segment de générateur (3).

12. Procédé de levage et de basculement d'un segment de générateur (3), en particulier d'un segment de générateur (3) d'une éolienne (100), **caractérisé par** les étapes de :
- fourniture du segment de générateur (3) dans une position de transport ;
- fixation d'un dispositif de levage-basculement (2) selon l'une quelconque des revendications précédentes 7 à 11 sur le segment de générateur (3) fourni dans la position de transport ;
- levage du segment de générateur (3) sur le dispositif de levage-basculement (2) ;
- rotation du segment de générateur levé dans une première position intermédiaire qui est différente de la position de transport ;
- déplacement du segment de générateur (3) dans une deuxième position intermédiaire dans laquelle la deuxième unité de fixation (92b) se détache du segment de générateur (3) ;
- dépose du segment de générateur, à partir de la position intermédiaire, dans une position de déclenchement du segment de générateur qui est différente de la position de transport et de la position intermédiaire, de sorte que le dispositif oscillant de déclenchement (20) du dispositif de déclenchement (1) soit déplacé, à partir de la situation de départ, dans la situation de déclenchement, de sorte que le dispositif oscillant de déclenchement (20) détache le dispositif de basculement de générateur (4) relié de manière détachable au segment de générateur (3) du segment de générateur (3).

13. Procédé selon la revendication 12 précédente, présentant les étapes de :
- retrait du dispositif de basculement de générateur (4) détaché du segment de générateur (3) du dispositif de levage-basculement (2) ; et/ou
- levage du segment de générateur (3) à l'aide du dispositif de levage de générateur (5), à partir de la position de déclenchement, dans une position de fonctionnement qui est différente de la position de déclenchement ; et/ou
- montage du segment de générateur (3) sur une nacelle de l'éolienne (100) dans la position de fonctionnement.

14. Procédé de montage d'un dispositif de levage-basculement selon l'une quelconque des revendications précédentes 7 à 11 sur un segment de générateur (3) démonté, en particulier sur un segment de générateur (3) démonté d'une éolienne (100), **caractérisé par** les étapes de :
- fourniture du dispositif de levage-basculement selon l'une quelconque des revendications 9 à 13 précédentes sur un sol, et
- enlèvement du segment de générateur (3) démonté dans une position de montage avec une grue principale, et
- introduction de premiers boulons de fixation (920a), qui sont disposés sur le segment de générateur (3), dans la première unité de fixation (92a) qui présente une ou plusieurs ouvertures de type trou, et
- levage du segment de générateur (3) sur le dispositif de levage-basculement sur une grue auxiliaire, jusqu'à ce que la deuxième unité de fixation (92b), qui présente une ou plusieurs rainures de fixation, reçoive les deuxièmes boulons de fixation (920b) disposés sur le segment de générateur (3), et
- pivotement du segment de générateur dans la position de transport,
et
- dépose du segment de générateur (3) pivoté dans la position de transport.
